# EUROPEAN PATENT APPLICATION

(11) **EP 4 714 890 A1**
(43) Date of publication of application: **25.03.2026**
(21) Application number: 24858024.3
(22) Date of filing: 28.06.2024
(51) Int. Cl.: B66F 7/00

(54) **STACKER CRANE**

(30) Priority: 25.08.2023 CN 202322307862 U; 06.09.2023 CN 202322430893 U; 06.09.2023 CN 202311147978; 06.09.2023 CN 202311148740
(71) Applicant: Meetfuture Technology (Shanghai) Co., Ltd., Shanghai 201306 (CN)
(72) Inventor: LIU, Yinglong, Shanghai 201306 (CN); MIAO, Feng, Shanghai 201306 (CN)
(74) Representative: Balder IP Law, S.L.
(86) International application number: PCT/CN2024/102630
(87) International publication number: WO 2025/044480

(57) **Abstract**

A stacker includes a traveling device, which includes a traveling box (100), a friction transmission mechanism (200) mounted in the traveling box (100), and a horizontal positioning assembly (101) for positioning a traveling position. The friction transmission mechanism (200) includes a friction drive wheel (201) in friction fit with a friction track (901) and a traveling power mechanism (202). The stacker further includes a lifting device, which includes a lifting frame (300) mounted at the top of the traveling box (100), a robotic arm carrier assembly (400) mounted on the lifting frame (300), a lifting transmission assembly for driving the robotic arm carrier assembly (400) to be lifted or lowered, a lifting power mechanism (501) for driving the lifting drive assembly, and a vertical positioning assembly (401) for positioning a lifting position of the robotic arm carrier assembly (400). The stacker further includes a control device (600),which is configured to control the traveling power mechanism (202) to drive the traveling device to travel to a target traveling position according to the traveling position fed back by the horizontal positioning assembly (101), and further configured to control the lifting power mechanism (501) to drive the robotic arm carrier assembly (400) to be lifted to a target lifting position according to the lifting position fed back by the vertical positioning assembly (401). The stacker can realize accurate positioning in a traveling direction and a lifting direction.

## Description

### TECHNICAL FIELD

Embodiments of the present disclosure relate to the technical field of logistics and warehousing, and in particular, to a stacker.

### BACKGROUND

With the increasing demand for semiconductors, conventional inefficient manual handling and storage can no longer meet the growing demand for semiconductor products, thus driving the continuous optimization of semiconductor transportation and storage equipment. In this environment, an automated stereoscopic warehouse came into being. The automatic stereoscopic warehouse is a kind of warehouse that uses high-level stereoscopic shelves to store articles, and uses the computer to automatically control an aisle-type stacker to access articles. The aisle-type stacker is a special crane developed with the appearance of the automated stereoscopic warehouse, usually referred to as a stacker, and it is the most important lifting and transportation equipment in the automated stereoscopic warehouse.

The stacker runs along a track in an aisle of the automated stereoscopic warehouse, and stores the articles located at an entrance of the aisle into a designated compartment of the stereoscopic shelf by a liftable carrier assembly, or takes out the articles in the designated compartment and transports the articles to the entrance of the aisle, so as to complete an access operation of the articles.

In this process, how to realize accurate positioning of the stacker in a traveling direction and a lifting direction, so as to realize accurate access operation, is an urgent problem to be solved in the present disclosure.

### SUMMARY

Embodiments of the present disclosure provide a stacker, which includes a traveling device, a lifting device and a control device. The traveling device includes a traveling box, a friction transmission mechanism mounted in the traveling box, and a horizontal positioning assembly mounted on the traveling box for positioning a traveling position of the traveling device. The friction transmission mechanism includes a friction drive wheel that passes through the traveling box and is in friction fit with a friction track on the ground, and a traveling power mechanism for driving the friction drive wheel to rotate. The lifting device includes a lifting frame mounted at the top of the traveling box, a robotic arm carrier assembly mounted on the lifting frame, a lifting transmission assembly for driving the robotic arm carrier assembly to be lifted or lowered along the lifting frame, a lifting power mechanism for driving the lifting drive assembly, and a vertical positioning assembly for positioning a lifting position of the robotic arm carrier assembly. The control device is configured to control the traveling power mechanism to drive the traveling device to travel to a target traveling position according to the traveling position fed back by the horizontal positioning assembly, and the control device is further configured to control the lifting power mechanism to drive the robotic arm carrier assembly to be lifted to a target lifting position according to the lifting position fed back by the vertical positioning assembly.

In some embodiments, a barcode mounting plate is horizontally provided along a traveling path of the stacker, and a plurality of traveling position barcodes are provided on the barcode mounting plate for indicating the traveling position. The horizontal positioning assembly includes a first code scanner mounted on the traveling box, and the first code scanner is configured to scan the traveling position barcodes and transmit a scanning result to the control device.

In some embodiments, the lifting device further includes a plurality of lifting position barcodes for indicating the lifting position. The vertical positioning assembly includes a second code scanner mounted on the robotic arm carrier assembly, and the second code scanner is configured to scan the lifting position barcodes and transmit a scanning result to the control device.

In some embodiments, the traveling device further includes: a traveling deceleration sensor assembly and/or a traveling position-limiting sensor assembly arranged on the traveling box. The traveling deceleration sensor assembly is configured to trigger the control device to perform a corresponding horizontal deceleration operation in response to sensing that the stacker travels to a corresponding horizontal deceleration position. The traveling position-limiting sensor assembly is configured to trigger the control device to perform a corresponding horizontal position-limiting operation in response to sensing that the stacker travels to a corresponding horizontal limit position.

In some embodiments, the horizontal deceleration operation includes: detecting whether a traveling speed of the stacker is less than a corresponding traveling speed threshold, and controlling the traveling power mechanism to decelerate and give an alarm if the traveling speed of the stacker is not less than the corresponding traveling speed threshold.

In some embodiments, the traveling deceleration sensor assembly includes a first-stage traveling deceleration sensor and a second-stage traveling deceleration sensor. The first-stage traveling deceleration sensor is configured to trigger the control device to detect whether the traveling speed of the traveling device is less than a first traveling speed threshold in response to sensing that the stacker travels to a first horizontal deceleration position, and control the traveling power mechanism to decelerate and give an alarm if the first traveling speed of the traveling device is not less than the first traveling speed threshold. The second-stage traveling deceleration sensor is configured to trigger the control device to detect whether the traveling speed of the traveling device is less than a second traveling speed threshold in response to sensing that the stacker travels to a second horizontal deceleration position, and control the traveling power mechanism to decelerate and give an alarm if the traveling speed of the traveling device is not less than the second traveling speed threshold. Along a traveling direction of the stacker, the stacker first reaches the first horizontal deceleration position and then reaches the second horizontal deceleration position, and the first traveling speed threshold is greater than the second traveling speed threshold.

In some embodiments, the lifting device further includes: at least one of an upper position-limiting sensor assembly, an upper deceleration sensor assembly, a lower deceleration sensor assembly, and a lower position-limiting sensor assembly arranged along a lifting direction of the robotic arm carrier assembly. The upper position-limiting sensor assembly is configured to trigger the control device to perform a corresponding lifting position-limiting operation in response to sensing that the robotic arm carrier assembly is lifted to a corresponding upper limit position. The upper deceleration sensor assembly is configured to trigger the control device to perform a corresponding lifting deceleration operation in response to sensing that the robotic arm carrier assembly is lifted to a corresponding upper deceleration position. The lower deceleration sensor assembly is configured to trigger the control device to perform a corresponding lowering deceleration operation in response to sensing that the robotic arm carrier assembly is lowered to a corresponding lower deceleration position. The lower position-limiting sensor assembly is configured to trigger the control device to perform a corresponding lowering position-limiting operation in response to sensing that the robotic arm carrier assembly is lowered to a corresponding lowering limit position. The upper limit position, the upper deceleration position, the lower deceleration position and the lower limit position are arranged in a listed sequence from top to bottom.

In some embodiments, a sky track is provided above a traveling path of the stacker. The top of the lifting frame is provided with an upper guide wheel assembly in sliding fit with the sky track.

In some embodiment, the stacker further includes: a power-taking assembly arranged on a side of the traveling box, a power-supply assembly electrically connected with the power-taking assembly, and an energy-storage assembly electrically connected with the power-taking assembly and the power-supply assembly. A portion of electrical energy obtained by the power-taking assembly is supplied to the power-supply assembly, another portion of the electrical energy is stored in the energy-storage assembly, and the power-supply assembly is configured to supply power to the stacker.

In some embodiments, the lifting transmission assembly includes: a driving pulley arranged on a side surface of the traveling box and connected with the lifting power mechanism, a driven pulley arranged at a top end of the lifting frame and connected with the driving pulley by a synchronous belt, and a vertical guide track arranged along a height direction of the lifting frame. The robotic arm carrier assembly is fixedly connected with the synchronous belt and is in sliding fit with the vertical guide track to be lifted or lowered along the vertical guide track driven by the synchronous belt.

In some embodiments, the side surface of the traveling box is provided with an adjusting wheel abutting against a side of the synchronous belt, and the adjusting wheel is rotatable along with the rotation of the synchronous belt.

In some embodiments, the traveling device further includes a drive wheel supporting seat for supporting the friction drive wheel. One end of the drive wheel supporting seat is rotatably fixed in the traveling box, and the other end of the drive wheel supporting seat is fixed in the traveling box by an elastic assembly arranged above the drive wheel supporting seat.

In some embodiments, the elastic assembly includes an elastic element and an elastic force adjusting mechanism. A bottom end of the elastic element is connected with a top surface of the other end of the drive wheel supporting seat. The elastic force adjusting mechanism is connected with a top end of the elastic element and is configured to adjust an elastic force generated by the elastic element.

In some embodiments, a position-limiting plate is provided in the traveling box, and the position-limiting plate is transversely arranged above the elastic element. The elastic force adjusting mechanism includes a fixing member in threaded fit with the position-limiting plate, and a bottom end of the fixing member is connected with the top end of the elastic element.

In some embodiments, the elastic assembly further includes a scale mounted on a top surface of the position-limiting plate.

In some embodiments, a plurality of sliding blocks are mounted at the bottom of the traveling box, and the plurality of sliding blocks are in sliding fit with a guide track on the ground.

In some embodiments, a light emitting end is provided on a traveling path of the stacker and a light receiving end is provided on the stacker. In response to the light receiving end receiving a light signal emitted by the light emitting end, the control device is triggered, based on access task data sent from a host computer, to control the traveling power mechanism to operate in combination with the traveling position positioned by the horizontal positioning assembly, and control the lifting power mechanism to operate in combination with the lifting position positioned by the vertical positioning assembly.

### BRIEF DESCRIPTION OF THE DRAWINGS

FIG. 1 is a schematic diagram illustrating a perspective view of a stacker according to an embodiment of the present disclosure.
FIG. 2 is a schematic diagram illustrating an enlarged view of portion A in FIG. 1.
FIG. 3 is a schematic diagram illustrating an enlarged view of portion B in FIG. 1.
FIG. 4 is a schematic diagram illustrating a rear view of the stacker according to the embodiment of the present disclosure.
FIG. 5 is a schematic diagram showing multi-stage deceleration plates according to an embodiment of the present disclosure.
FIG. 6 is a schematic diagram illustrating a side view of the stacker according to the embodiment of the present disclosure.
FIG. 7 is a schematic diagram illustrating a partial perspective view of a lifting frame of the stacker according to the embodiment of the present disclosure.
FIG. 8A is a schematic diagram illustrating a perspective view of a traveling device of the stacker according to the embodiment of the present disclosure.
FIG. 8B is a schematic diagram illustrating the principle of a lifting drive structure of the traveling device of the stacker according to the embodiment of the present disclosure.
FIG. 9 is a schematic diagram illustrating an internal structure of the traveling device of the stacker according to the embodiment of the present disclosure.
FIG. 10 is a schematic diagram illustrating a top cross-sectional view of the traveling device of the stacker according to the embodiment of the present disclosure.
FIG. 11 is a schematic diagram illustrating the working principle of performing a first stag deceleration according to an embodiment of the present disclosure.
FIG. 12 is a schematic diagram illustrating the working principle of performing a second-stage deceleration according to an embodiment of the present disclosure.
FIG. 13 is a schematic diagram illustrating the working principle of performing a third-stage deceleration according to an embodiment of the present disclosure.
FIG. 14 is a working flowchart of a stacker according to an embodiment of the present disclosure.
FIG. 15 is a schematic diagram illustrating a structure of a traveling box of a stacker according to an embodiment of the present disclosure viewed from one perspective.
FIG. 16 is a schematic diagram illustrating a partial structure of the traveling box of the stacker according to the embodiment of the present disclosure viewed from another perspective.
FIG. 17 is a schematic diagram illustrating a side view of a traveling box of a stacker according to an embodiment of the present disclosure.
FIG. 18 is a schematic diagram showing mounting the traveling box of the stacker and columns of the stacker according to an embodiment of the present disclosure.
FIG. 19 is a schematic diagram illustrating an internal structure of a traveling mechanism according to an embodiment of the present disclosure.
FIG. 20 is a schematic diagram illustrating a perspective view of a traveling device of the stacker according to the embodiment of the present disclosure.
FIG. 21 is a schematic diagram illustrating a side cross-sectional view of the traveling device for the stacker according to an embodiment of the present disclosure.
FIG. 22 is a schematic diagram showing a stress state of partial structures of the traveling device for the stacker according to an embodiment of the present disclosure.
FIG. 23 is a schematic diagram illustrating a perspective view of a lifting box and a stacker according to an embodiment of the present disclosure.
FIG. 24 is a schematic diagram illustrating a perspective view showing a cable plug interface and a position monitoring device according to an embodiment of the present disclosure.
FIG. 25 is a schematic diagram illustrating a perspective view of the lifting box according to an embodiment of the present disclosure.
FIG. 26 is a schematic diagram illustrating a perspective view after a cable of the lifting box is connected to the cable plug interface according to an embodiment of the present disclosure.
FIG. 27 is a schematic diagram illustrating a perspective view of a box body frame and guide sliding blocks according to an embodiment of the present disclosure.
FIG. 28 is a schematic diagram illustrating a perspective view of a connecting plate and a transmission belt according to an embodiment of the present disclosure.
FIG. 29 is a schematic diagram illustrating an enlarged view of portion A in FIG. 28 according to embodiment of the present disclosure.
FIG. 30 is a schematic diagram illustrating a structure of a tensioning device according to an embodiment of the present disclosure.
FIG. 31 is a schematic diagram illustrating an enlarged view of portion B in FIG. 30 according to an embodiment of the present disclosure.
FIG. 32 is a schematic diagram illustrating an enlarged view of portion C in FIG. 30 according to an embodiment of the present disclosure.
FIG. 33 is a schematic diagram illustrating a perspective view of the cable plug interface and an interface bracket according to an embodiment of the present disclosure.

### DETAILED DESCRIPTION OF THE EMBODIMENTS

In order to make the objectives, technical solutions and advantages of the present disclosure clear, the embodiments of the present disclosure are described in detail in conjunction with the drawings and the embodiments. It should be understood that the specific embodiments described herein are for the purpose of explaining the present disclosure only and are not intended to limit the present disclosure. Based on the embodiments in the present disclosure, all other embodiments obtained by those skilled in the art without any creative efforts shall fall within the protection scope of the present disclosure.

The terms used herein are for the sole purpose of describing specific embodiments and are not intended to limit the present disclosure. The singular forms of "a", "the", and "said" used in the present disclosure and the appended claims are also intended to include the plural form, unless the context clearly indicates otherwise. It should also be understood that the term "and/or" as used herein refers to and includes any or all possible combinations of one or more of associated listed items.

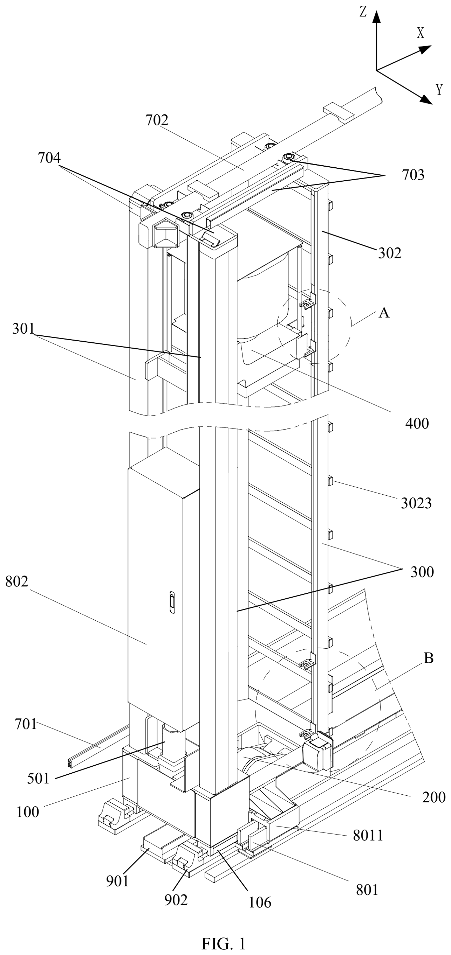

Embodiments of the present disclosure provide a stacker, as shown in FIG. 1 to FIG. 10, which mainly includes a traveling device, a lifting device and a control device.

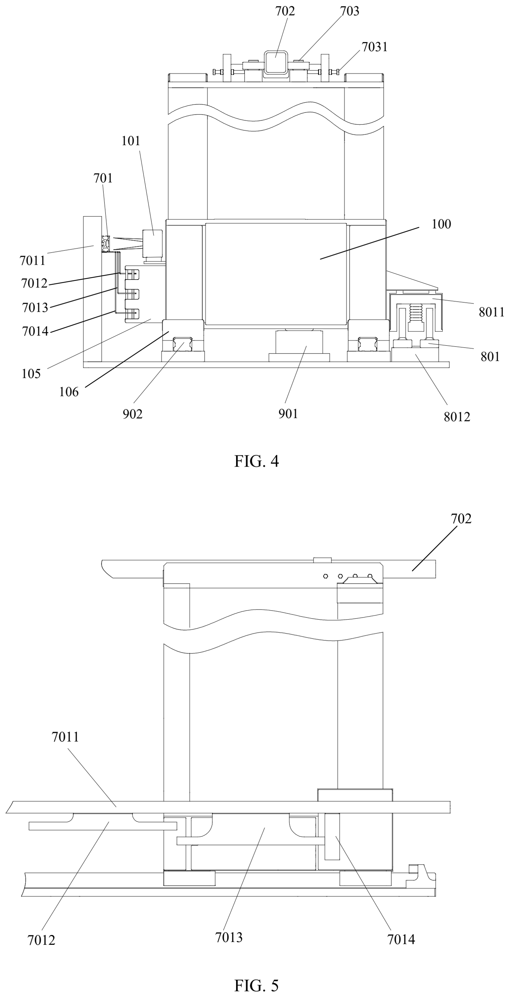

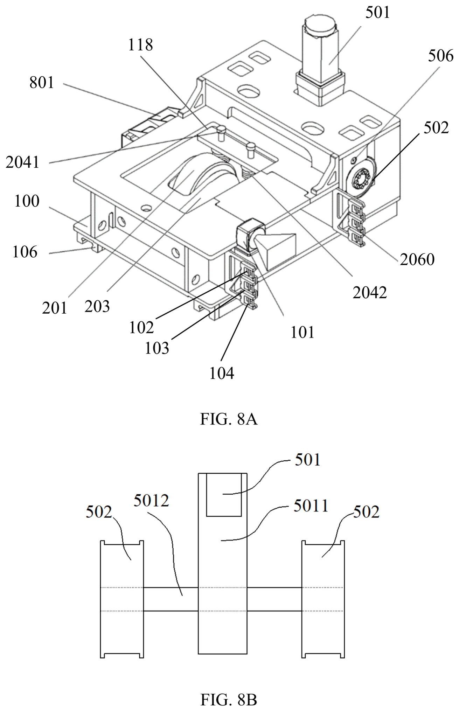

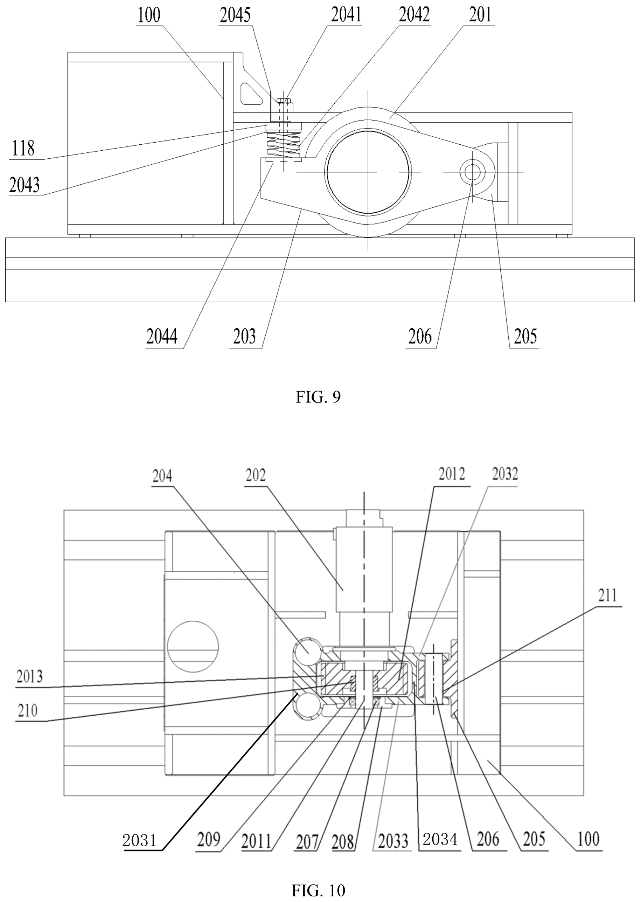

As shown in FIG. 1, the traveling device includes a traveling box 100, a friction transmission mechanism 200 mounted in the traveling box 100, and a horizontal positioning assembly 101 (referring to FIG. 4) mounted on the traveling box 100. The horizontal positioning assembly 101 is configured to position a real-time traveling position of the traveling device. The traveling box 10 provides a bearing surface for the friction transmission mechanism 200. The friction transmission mechanism 200 provides a traveling power source for the stacker. As shown in FIG. 8 to FIG. 10, the friction transmission mechanism 200 includes a friction drive wheel 201 that passes through a bottom plate of the traveling box 100 and is in friction fit with a friction track 901 on the ground, and a traveling power mechanism 202 (referring to FIG. 10) for driving the friction drive wheel 201 to rotate. In some embodiments, the traveling power mechanism 202 adopts a servomotor reducer, which has the advantages of accurate positioning, and timely response to acceleration and deceleration during operation, thereby improving the positioning accuracy of the traveling of the stacker.

As shown in FIG. 1, the lifting device includes a lifting frame 300 mounted at the top of the traveling box 100, a robotic arm carrier assembly 400 mounted on the lifting frame 300 for carrying an article, a lifting transmission assembly for driving the robotic arm carrier assembly 400 to be lifted or lowered along the lifting frame 300, a lifting power mechanism 501 for driving the lifting transmission assembly, and a vertical positioning assembly 401 for positioning a real-time lifting position of the robotic arm carrier assembly 400. Driven by the lifting power mechanism 501 and the lifting transmission assembly, the robotic arm carrier assembly 400 can be lifted or lowered along the lifting frame 300 to place an article into a designated compartment of a stereoscopic shelf or to take out an article in a designated compartment. In some embodiments, the lifting power mechanism 501 adopts a servomotor reducer to improve the positioning accuracy of the lifting of the stacker.

In some embodiments, the control device 600 is configured to control the traveling power mechanism 202 to drive the traveling device to travel to a target traveling position according to the traveling position fed back by the horizontal positioning assembly 101. The control device 600 is further configured to control the lifting power mechanism 501 to drive the robotic arm carrier assembly 400 to be lifted to a target lifting position according to the lifting position fed back by the vertical positioning assembly 401. In this way, with the assistance of the horizontal positioning assembly 101 and the vertical positioning assembly 401, the control device 600 can accurately determine in real time whether the stacker travels in place (that is., whether the traveling device arrives at the target traveling position) or is lifted in place (that is, whether the robotic arm carrier assembly 400 is lifted to the target lifting position), and accordingly control the traveling power mechanism 202 and the lifting power mechanism 501 in real time, so that the accurate positioning of the stacker in the traveling direction (that is, a length direction X of the stacker) and the lifting direction (that is, a vertical direction, in other words, a height direction Z of the stacker) can be realized, thereby improving the accuracy of access operation of the stacker.

In some embodiments, as shown in FIG. 4, a barcode mounting plate 701 horizontally mounted by a barcode plate mounting bracket 7011 is provided along a traveling path of the stacker, and a plurality of traveling position barcodes (which may be one-dimensional barcodes or two-dimensional barcodes) are provided on the barcode mounting plate 701 for indicating the current traveling position. On this basis, the horizontal positioning assembly 101 includes a first code scanner mounted on the traveling box 100, and the first code scanner is configured to scan the traveling position barcodes and transmit a scanning result to the control device 600, so that the control device 600 can obtain the current traveling position of the stacker by analyzing the scanning result of the first code scanner.

In an implementation, a plurality of lifting position barcodes (which may be one-dimensional barcodes or two-dimensional barcodes) for indicating the lifting position are provided on the lifting frame 300. On this basis, the vertical positioning assembly 401 includes a second code scanner mounted on the robotic arm carrier assembly 400, and the second code scanner is configured to scan the lifting position barcodes and transmit a scanning result to the control device 600, so that the control device 600 can obtain the current lifting position of the robotic arm carrier assembly 400 by analyzing the scanning result of the second code scanner.

It can be seen that the positioning of the stacker in the traveling direction and the lifting direction provided by the embodiments of the present disclosure can be realized by the positioning of barcode recognition, which has the advantages of firmness, and high recognition efficiency.

In addition, in some embodiments, in order to ensure the safety of the stacker during operation and prevent the stacker from running beyond the limit position and causing collision, a corresponding deceleration sensor assembly and/or a position-limiting sensor assembly are respectively provided in a horizontal direction (that is, the traveling direction of the stacker) and a vertical direction (that is, the height direction of the stacker), which is described in detail below.

In the horizontal direction (a X-direction), the stacker runs in a narrow aisle with closed ends, with a long stroke in the horizontal direction. In order to complete the efficient access task, a running speed of the stacker is relatively high. However, the high running speed leads to the problem of stopping untimely and thus colliding with the closed ends of the aisle. In order to ensure the safety of the stacker in the horizontal direction, the traveling deceleration sensor assembly and/or the traveling position-limiting sensor assembly are mounted on the traveling box 100. The traveling deceleration sensor assembly is configured to trigger the control device 600 to perform a corresponding horizontal deceleration operation in response to sensing that the stacker reaches a corresponding horizontal deceleration position. The horizontal deceleration operation includes: detecting whether a traveling speed of the stacker is less than a corresponding traveling speed threshold, and controlling the traveling power mechanism 202 to decelerate and give an alarm if the traveling speed of the stacker is not less than the corresponding traveling speed threshold. The traveling position-limiting sensor assembly is configured to trigger the control device 600 to perform a corresponding horizontal position-limiting operation in response to sensing that the stacker reaches a corresponding horizontal limit position. The horizontal position-limiting operation includes: disconnecting a power source of the entire stacker and giving an alarm.

In the embodiments shown in FIG. 4, FIG. 5 and FIG. 8, the traveling deceleration sensor assembly includes a first-stage traveling deceleration sensor 102 and a second-stage traveling deceleration sensor 103. The traveling position-limiting sensor assembly includes a traveling position-limiting sensor 104, which can be used as a three-stage traveling deceleration sensor. The first-stage traveling deceleration sensor 102 is configured to trigger the control device 600 to detect whether the traveling speed of the traveling device is less than a first traveling speed threshold in response to sensing that the stacker travels to a first horizontal deceleration position, and control the traveling power mechanism 202 to decelerate (for example, by cutting off a power source of the traveling power mechanism 202) and give an alarm if the first traveling speed of the traveling device is not less than the first traveling speed threshold. The second-stage traveling deceleration sensor 103 is configured to trigger the control device 600 to detect whether the traveling speed of the traveling device is less than a second traveling speed threshold in response to sensing that the stacker travels to a second horizontal deceleration position, and control the traveling power mechanism 202 to decelerate (for example, by cutting off the power source of the traveling power mechanism 202) and give an alarm if the traveling speed of the traveling device is not less than the second traveling speed threshold. The three-stage traveling deceleration sensor (that is, the traveling position-limiting sensor 104) is configured to directly trigger the control device 600 to cut off a power source of the entire stacker and give an alarm without performing a speed judgment in response to sensing that the stacker arrives at a third horizontal deceleration position (that is, a horizontal limit position). It should be understood that along the traveling direction of the stacker, the stacker first reaches the first horizontal deceleration position, then the second horizontal deceleration position, finally the third horizontal deceleration position, and the first traveling speed threshold is greater than the second traveling speed threshold.

In the embodiment shown in FIG. 4 and FIG. 5, a first-stage deceleration plate 7012 is arranged at the first horizontal deceleration position, a second-stage deceleration plate 7013 is arranged at the second horizontal deceleration position, and a third-stage deceleration plate 7014 is arranged at the third horizontal deceleration position. As shown in FIG. 5, all deceleration plates can be mounted on the barcode plate mounting bracket 7011. In some embodiments, the first-stage traveling deceleration sensor 102, the second-stage traveling deceleration sensor 103 and the third-stage traveling deceleration sensor 104 all adopt grooved photoelectric sensors, which can be defined as first-stage, second-stage and third-stage grooved photoelectric sensors respectively, and are mounted on a same sensor bracket 105 and aligned in the vertical direction. In response to the stacker moving to the first horizontal deceleration position, the first-stage deceleration plate 7012 enters a groove of the first-stage grooved photoelectric sensor. Similarly, in response to the stacker moving to the second horizontal deceleration position, the second-stage deceleration plate 7013 enters a groove of the second-stage grooved photoelectric sensor. In response to the stacker moves to the third horizontal deceleration position, the third-stage deceleration plate 7014 enters a groove of the third-stage grooved photoelectric sensor. Each grooved photoelectric sensor outputs a corresponding trigger signal to the control device 600 in response to detecting that the deceleration plate enters the corresponding groove.

In addition, since two ends of the aisle in which the stacker runs are closed, the first-stage deceleration plate 7012, the second-stage deceleration plate 7013 and the third-stage deceleration plate 7014 are provided on each of the two ends of the aisle. Accordingly, the first-stage traveling deceleration sensor 102, the second-stage traveling deceleration sensor 103 and the third-stage traveling deceleration sensor 104 are provided close to a front end of the traveling box 100, and the first-stage traveling deceleration sensor 102, the second-stage traveling deceleration sensor 103 and the third-stage traveling deceleration sensor 104 are also provided close to a rear end of the traveling box 100. When the stacker performs a task and the stacker is running to either end of the aisle, the corresponding first-stage traveling deceleration sensor 102, the second-stage traveling deceleration sensor 103 and the third-stage traveling deceleration sensor 104 provided on the stacker can detect the corresponding first-stage deceleration plate 7012, the second-stage deceleration plate 7013 and the third-stage deceleration plate 7014 in sequence, thereby ensuring the stacker to be safely stopped.

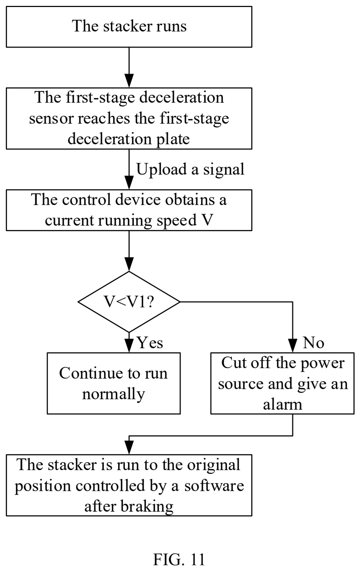

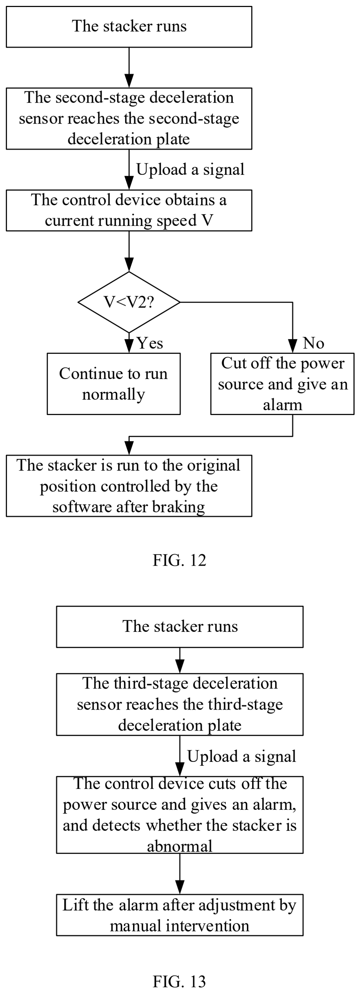

As shown in FIG. 11 to FIG. 13, by means of the aforementioned first-stage traveling deceleration sensor 102, the second-stage traveling deceleration sensor 103, the third-stage traveling deceleration sensor 104, the first-stage deceleration plate 7012, the second-stage deceleration plate 7013 and the third-stage deceleration plate 7014, the following first-stage, second-stage and third-stage deceleration operations can be realized.

In response to the first-stage traveling deceleration sensor 102 of the stacker running through the first-stage deceleration plate 7012, the first-stage traveling deceleration sensor 102 detects the first-stage deceleration plate 7012 and uploads a trigger signal to the control device 600. Then, the control device 600 obtains a current running speed V of the stacker and determines whether the current running speed V is less than the first traveling speed threshold V1 (for example, V1=1m/s). If V<Vl, the stacker can realize controllable normal braking and continue to run normally. If V>V1, the power source of the traveling power mechanism 202 is cut off and an alarm is given to realize rapid deceleration. After the stacker is safely stopped, a software control portion of the control device 600 is performed to make the stacker run to an original position.

In response to the second-stage traveling deceleration sensor 103 of the stacker running through the second-stage deceleration plate 7013, the second-stage traveling deceleration sensor 103 detects the second-stage deceleration plate 7013 and uploads a trigger signal to the control device 600. Then the control device 600 obtains a current running speed V of the stacker and determines whether the current running speed V is less than the second-stage traveling speed threshold V2 (for example, V2=0.5m/s). If V< V2, the stacker can realize controllable normal braking and continue to run normally. If V>V2, the power source of the traveling power mechanism 202 is cut off and an alarm is given to realize rapid deceleration. After the stacker is safely stopped, a software control portion of the control device 60 is performed to make the stacker run to an original position.

In response to the third-stage traveling deceleration sensor 104 of the stacker running through the third-stage deceleration plate 7014, the third-stage traveling deceleration sensor 104 detects the third-stage deceleration plate 7014 and uploads a trigger signal to the control device 600. Then the control device 600 forcibly cuts off all power sources of the stacker and gives an alarm, and simultaneously detects whether the stacker is abnormal. The alarm alerts manual intervention, and the alarm is subsequently lifted after adjustment by manual intervention.

In the vertical direction (the Z-direction), when the robotic arm carrier assembly 400 is lifted or lowered in the vertical direction under the action of the synchronous belt 503, in order to ensure the safety of the carried articles, e.g. wafers, and to prevent the wafers from being damaged due to colliding with the sky track 702 at the top or the traveling box 100 at the bottom by over-running, an upper position-limiting sensor assembly 303, an upper deceleration sensor assembly 304, a lower deceleration sensor assembly 305, and/or a lower position-limiting sensor assembly 306 are provided at an upper end and a lower end of the lifting frame 300.

The upper position-limiting sensor assembly 303 is arranged at an upper limit position and is configured to trigger the control device 600 to perform a corresponding lifting position-limiting operation in response to sensing that the robotic arm carrier assembly 400 is raised to the corresponding upper limit position. The upper deceleration sensor assembly 304 is arranged at an upper deceleration position and is configured to trigger the control device 600 to perform a corresponding lifting deceleration operation in response to sensing that the robotic arm carrier assembly 400 is raised to the corresponding upper deceleration position. The lower deceleration sensor assembly 305 is arranged at a lower deceleration position and is configured to trigger the control device 600 to perform a corresponding lowering deceleration operation in response to sensing that the robotic arm carrier assembly 400 is lowered to the corresponding lower deceleration position. The lower position-limiting sensor assembly 306 is arranged at a lower limit position and is configured to trigger the control device 600 to perform a corresponding lowering position-limiting operation in response to sensing that the robotic arm carrier assembly 400 is lowered to the corresponding lower limit position. It should be understood that the upper limit position, the upper deceleration position, the lower deceleration position and the lower limit position are arranged in a listed sequence from top to bottom.

Specifically, the lifting/lowering deceleration operation includes: detecting whether a lifting/lowering speed of the robotic arm carrier assembly 400 is less than a corresponding lifting/lowering speed threshold, and if not, indicating a risk of a collision, controlling the lifting power mechanism 501 to decelerate (for example, rapidly decelerate by cutting off the power source of the lifting power mechanism 501) and giving an alarm. The lifting/lowering position-limiting operation includes: disconnecting the power source of the entire stacker.

In some embodiments, the upper/lower deceleration sensor assembly 304/305, the upper/lower position-limiting sensor assembly 303/306 may adopt grooved photoelectric sensors. Accordingly, the robotic arm carrier assembly 400 is provided with a trigger sheet 401 that can be lifted or lowered with lifting or lowering of the robotic arm carrier assembly 400. In response to the trigger sheet 401 running into a groove of the corresponding groove photoelectric sensor, the corresponding grooved photoelectric sensor senses that the robotic arm carrier assembly 400 is lifted/lowered to the corresponding upper/lower deceleration position, or the upper/lower limit position.

The above multi-stage deceleration and position-limiting safeguards can ensure the safe and reliable operation of the stacker.

Referring again to FIG. 1, a sky track 702 is provided above a traveling path of the stacker. The top of the lifting frame 300 is provided with an upper guide wheel assembly 703 in sliding fit with the sky track 70. By means of the guide wheel in the upper guide wheel assembly 703, the stacker is slidable along the sky track 702. In the embodiments of the present disclosure, the upper guide wheel assembly 703 is used as a guide assembly for an upper portion of the stacker, and a distance between the guide wheel and the sky track 702 can be adjusted by an upper guide wheel adjusting screw 7031. In a case that a wheel surface of the guide wheel abuts against a side surface of the sky track 702, the sky track 702 can support the upper portion of the stacker, and to a certain extent play the role of anti-tilting (inhibiting tilting) and guiding (guiding the stacker to run in the direction of the length extension of the sky track) for the entire stacker.

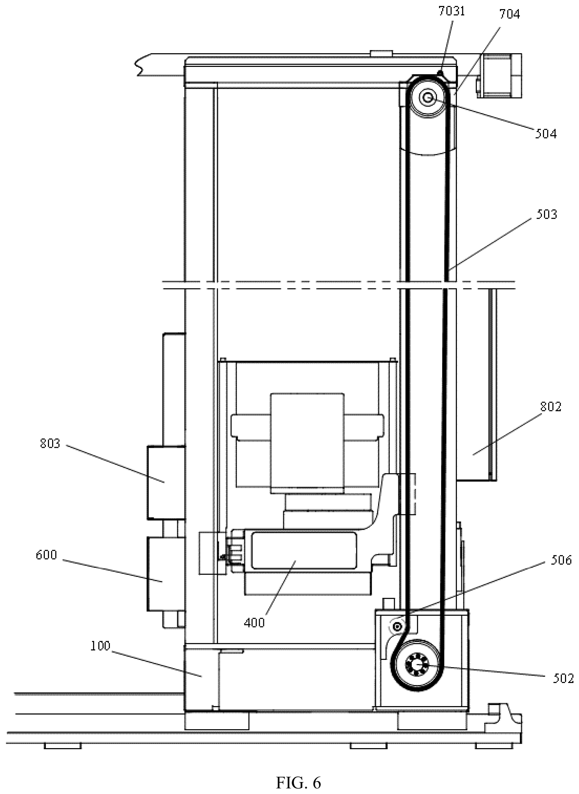

In an implementation, as shown in FIG. 4 and FIG. 6, the stacker further includes: a power-taking assembly 801 arranged on a side of the traveling box 100, a power-supply assembly 802 (such as an electric control cabinet) electrically connected with the power-taking assembly 801, and an energy-storage assembly 803 (such as a capacitor) electrically connected with the power-taking assembly 801 and the power-supply assembly 802. A portion of electrical energy obtained by the power-taking assembly 801 is supplied to the power-supply assembly 802 and another portion of the electrical energy is stored in the energy-storage assembly 803, and the power-supply assembly 802 is configured to supply power to the stacker. In some embodiments, the power-taking assembly 801 is a wireless power-taking assembly 801, and the wireless power-taking assembly 801 has a wireless power-taking receiving terminal 8011, and the wireless power-taking receiving terminal 8011 can obtain utility power in a wireless manner, so as to meet the requirement of 100-class dust-free and have a longer service life than the wired power supply method in the drag chain. The wireless power-taking assembly 801 is supported by a wireless power-taking bracket 8012, which can be welded and processed from stainless steel with excellent strength and simple installation.

In an implementation, as shown in FIG. 1, the lifting frame 300 includes a set of main columns 301 and a set of auxiliary columns 302 arranged opposite to each other along the length direction (that is, the X-direction) of the stacker. The set of main columns 301 includes two main columns 301 arranged opposite to each other along the width direction (that is, the Y-direction) of the stacker, the set of auxiliary columns 302 includes two auxiliary columns 302 arranged opposite to each other along the width direction of the stacker, and the four columns 301 and 302 are mounted between the traveling box 100 and the sky track 702. The main columns 301 play the supporting and guiding role for the robotic arm carrier assembly 400, and the lifting position barcode, the upper position-limiting sensor assembly 303, the upper deceleration sensor assembly 304, the lower deceleration sensor assembly 305, and the lower position-limiting sensor assembly 306 are provided on the auxiliary columns 302. In addition, by providing the auxiliary columns 302, the pressure borne by the main columns 301 can be shared, thereby reducing the stress of each column of the stacker.

In some embodiments, as shown in FIG. 1, FIG. 6, and FIG. 7, the lifting transmission assembly includes: a driving pulley 502 arranged on a side surface of the traveling box 100 and connected with the lifting power mechanism 501, a driven pulley 504 arranged at a top of end of the lifting frame 300 and connected with the driving pulley 502 by a synchronous belt 503, and a vertical guide track 505 vertically arranged along the main columns 301 of the lifting frame 300. The driving pulley 502, the driven pulley 504, and the synchronous belt 503 form a belt transmission structure. The robotic arm carrier assembly 400 is fixedly connected with the synchronous belt 503, and is in sliding fit with the vertical guide track 505, so as to be lifted or lowered along the vertical guide track 505 driven by the synchronous belt 503. In order to ensure the stable operation of the robotic arm carrier assembly 400, a belt transmission structure is provided on a side surface of each of the two main columns 301, and the two belt transmission structures operate synchronously to synchronously drive the robotic arm carrier assembly 400 to be lifted or lowered.

In the embodiments shown in FIG. 1 and FIG. 6, the driven pulley 504 is arranged at the top end of the lifting frame 300 by means of a pulley mounting assembly 704 arranged at the top of the two main columns 301. The pulley mounting assembly 704 both carries the driven pulley 504 and defines a distance between the two main columns 301. In the vertical direction, the pulley mounting assembly 704 is arranged between the main columns 301 and the upper guide wheel assembly 703, which further plays the role of connecting the main columns 301 with the upper guide wheel assembly 703.

As shown in FIG. 8A and FIG. 8B, a conversion mechanism 5011 is provided in the traveling box 100, and a lifting power mechanism 501 is provided on the traveling box 100. An output shaft of the lifting power mechanism 501 is in transmission connection with an input shaft of the conversion mechanism 501. The conversion mechanism 5011 (for example, a reducer) has two output shafts 5012. The two output shafts 5012 are respectively connected to the driving pulleys 502 located on two sides of the traveling box 100 to rotate driving pulley shafts 5012, and the driving pulley shafts 5012 further rotate the driving pulleys 502.

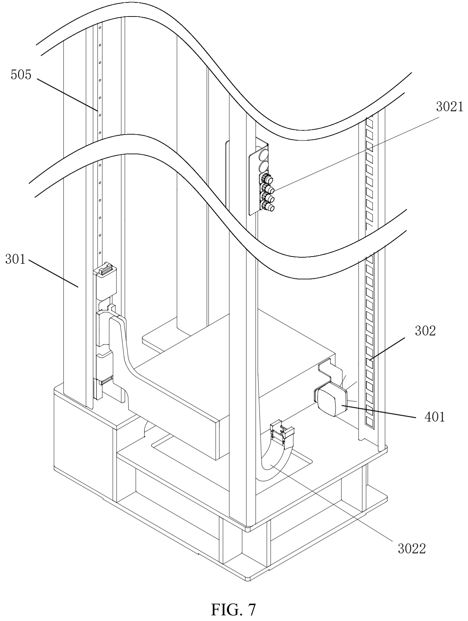

In some embodiments, as shown in FIG. 7, the layout of the exterior wiring is in the form of wire slots, and all of the wire slots are defined inside the stacker. One of the auxiliary columns 302 is provided with the wire slots in the upper portion to protect the wiring, and a tank chain 3022 in the lower portion, and the wiring moving with lifting or lowering of the robotic arm carrier assembly 400 is provided in the tank chain 3022 by a cable insertion interface 3021.

As shown above, segregated layout of driving, guiding, positioning, deceleration, position-limiting, and cable on the main and auxiliary columns enables effective control of the width of the stacker while realizing a high degree of multi-functional integration in the layout. Specifically, if the above multifunctional portions are arranged on a single column of the stacker, the width of the single column needs to be extended, and the single column needs to meet the strength requirements by increasing the material. In addition, as shown in FIG. 1, a climbing ladder 3023 may be provided on the auxiliary columns 302 to facilitate maintenance.

In some embodiments, referring again to FIG. 6, the traveling box 100 is provided with an adjusting wheel 506 abutting against a side surface of the synchronous belt 503 (specifically, abutting against the synchronous belt 503 from an outer side to an inner side of the synchronous belt 503), and the adjusting wheel 506 is rotatable along with the rotation of the synchronous belt 503. The adjusting wheel 506, on the one hand, plays a tensioning role for the synchronous belt 503 and, on the other hand, adjusts a direction of the synchronous belt 503 so that the synchronous belt 503 runs within a range of the main columns 301.

In some embodiments, as shown in FIG. 10, the friction drive wheel 201 specifically includes a rotation shaft 2011, a hub 2012, and a wheel surface 2013. The rotation shaft 2011 and the hub 2012 of the friction drive wheel 201 are made of stainless steel, carbon steel, aluminum alloy and other materials, which can enhance the anti-rust and anti-pollution ability in a case of being made of stainless steel and reduce the overall weight of the friction drive wheel 201 in a case of being made of aluminum alloy. The wheel surface 2013 of the friction drive wheel 201 adopts a high-friction wheel surface (the friction coefficient µ satisfies, for example, 0.3≤µ≤0.45), and can be made of high-elasticity wear-resistant rubber, so as to increase the friction coefficient between the wheel surface 2013 and a friction track 901 (referring to FIG. 4), which can facilitate quick response to acceleration and deceleration, prolong the service life, reduce the generation of dust, and minimize the noise. The friction track 901, in fit with the friction drive wheel 201, can be machined from an aluminum alloy track to ensure that the track has a good flatness, which can minimize the wear and tear of the friction drive wheel 201 during operation and reduce the environmental dust generated during operation.

In the embodiment shown in FIGS. 8 to 10, the friction drive wheel 201 is supported in the traveling box 100 by the drive wheel supporting seat 203. One end of the drive wheel supporting seat 203 is rotatably fixed in the traveling box 100, and the other end of the drive wheel supporting seat 203 is fixed in the traveling box 100 by an elastic assembly 204 vertically arranged above the drive wheel supporting seat 203, thus forming a lever structure. The downward pressure exerted by the elastic assembly 204 enables the friction drive wheel 201 to travel on the friction track 901, and vibration damping can be realized by the action of the elastic assembly 204.

Specifically, a fixed seat 205 is provided on a side wall along the width direction of the traveling box 100, and one end of the drive wheel supporting seat 203 is rotatably connected with the fixed seat 205 by a connecting rotation shaft 206, so that the friction drive wheel 201 can swing around the connecting rotation shaft 206 and the fixed seat 205. As shown in FIG. 10, the rotation shaft 2011 of the friction drive wheel 201 is set to be coaxially connected with the output shaft of the traveling power mechanism 202, so that the rotation shaft 2011 of the friction drive wheel 201 rotates synchronously when the output shaft of the motor 202 rotates, thereby driving the friction drive wheel 201 to roll forward along the friction track 901. In some embodiments, the connecting rotation shaft 206 is set to be parallel to the rotation shaft 2011 of the friction drive wheel 201, so that the friction drive wheel 201 can move up and down by the swinging of the drive wheel supporting seat 203 to adapt to the change of the traveling surface of the track 901 when the friction track 901 is uneven. In some embodiments, the fixed seat 205 is made of stainless steel, which has anti-corrosion and anti-rust functions. The fixed seat 205 is fixed to the side wall of the traveling box 100 by screws during installation.

In the embodiments shown in FIGS. 8 to 10, the elastic assembly 204 is configured to generate a stable and controllable pressure between the friction drive wheel 201 and the friction track 901, and mainly includes an elastic element and an elastic force adjusting mechanism. The elastic element is arranged vertically and a bottom end of the elastic element is connected to a top surface of the other end of the drive wheel supporting seat 203. The elastic force adjusting mechanism is connected with a top end of the elastic element and is configured to adjust an elastic force generated by the elastic element. By adjusting the elastic force of the elastic element using the elastic force adjusting mechanism, the pressure applied to the other end of the drive wheel supporting seat 203 can be adjusted, and thus the pressure of the friction drive wheel 201 on the friction track 901 can be adjusted, so as to meet the different use requirements.

Referring specifically to FIG. 9, a position-limiting plate 118 is provided in the traveling box 100, and the position-limiting plate 118 is transversely arranged above the elastic element. The elastic force adjustment mechanism includes a fixing member 2041 that is vertically arranged and in threaded fit with the position-limiting plate 118, and a bottom end of the fixing member 2041 is connected with the top end of the elastic element. The position-limiting plate 118 is configured herein to bear the reaction force of the elastic element acting on the fixing member 2041, and has the function of bending resistance and preventing the relative movement of the fixing member 2041. In some embodiments, the fixing member 2041 adopts a standard fine thread screw, which is simple to process and mold, and can bear high pressure without loosening easily.

Referring again to FIG. 9, the elastic element includes: an elastic element body 2042, a first clamping plate 2043 in snap fit with a top end of the elastic element body 2042, and a second clamping plate 2044 in snap fit with a bottom end of the elastic element body 2042. The first clamping plate 2043 is fixedly connected with the bottom end of the fixing member 2041 of the elastic force adjusting mechanism, and the second clamping plate 2044 is fixedly connected with the other end of the drive wheel supporting seat 203 by bolts. The elastic element body 2042 can adopt a high-strength spring, which can ensure the stability of the pressure applied to the friction drive wheel 201. The first clamping plate 2043 and the second clamping plate 2044, as the position-limiting supporting mechanism at two ends of the elastic element, can prevent the elastic element body 2042 from being falling out of position when compressed. It should be understood that the elastic element body 2042 is not limited to the high-strength spring, and can adopt any other suitable elastic body, such as elastic rubber, without any specific limitation.

In some embodiments, as shown in FIG. 9, the elastic assembly 204 further includes a scale 2045 vertically mounted to a top surface of the position-limiting plate 118, and the scale 2045 is arranged adjacent to and parallel to the fixing member 2041. When the fixing member 2041 is adjusted up or down, the scale 2045 can reflect an adjustment amount in real time, which facilitates precise application of the desired pressure to the friction drive wheel 201.

In some embodiments, the drive wheel supporting seat 203 is configured to provide a mounting space for the friction drive wheel 201, and as shown in FIG. 10, includes a first connecting portion 2031, a first mounting plate portion 2032, a second mounting plate portion 2033, and a second connecting portion 2034 which are integrally formed. The first mounting plate portion 2032 and the second mounting plate portion 2033 are located at two ends of the first connecting portion 2031 and symmetrically arranged along the width direction of the traveling box 100, so that the friction drive wheel 201 is fixed in a space defined by the first connecting portion 2031, the first mounting plate portion 2032, the second mounting plate portion 2033, and the second connecting portion 2034, and the rotation shaft 2011 of the friction drive wheel 201 is orthogonal to the first mounting plate portion 2032 and the second mounting plate portion 2033.

A housing of the traveling power mechanism 202 is fixedly connected with a side, away from the second mounting plate portion 2033, of the first mounting plate portion 2032 by screws, the first mounting plate portion 2032 and the second mounting plate portion 2033 are further provided with coaxial through holes respectively, and the output shaft of the traveling power mechanism 202 passes through the through hole of the first mounting plate portion 2032 to be connected with one end of the rotation shaft 2011 of the friction drive wheel 201, and the other end of the rotation shaft 2011 of the friction drive wheel 201 extends through the through hole of the second mounting plate portion 2033. The drive wheel supporting seat 203 enables the friction drive wheel 201 to operate more stably.

Referring again to FIG. 10, one end of the drive wheel supporting seat 203 includes one end of the first mounting plate portion 2032 and one end of the second mounting plate portion 2033, which are rotatably connected with the connecting rotation shaft 206. In some embodiments, two elastic assemblies 204 are provided, the first connecting portion 2031 is arranged transversely, and the other end of the first mounting plate portion 2032 and the other end the second mounting plate portion 2033 are connected by the first connecting portion 2031, so that the first connecting portion 2031 is connected with the two elastic assemblies 204 as the other end of the drive wheel supporting seat 203, to adjust the pressure applied to the friction drive wheel 201 by the two elastic assemblies 204. It should be understood that in order to ensure stable operation of the friction drive wheel, the pressures applied to the friction drive wheel 201 by the two elastic assemblies 204 should be the same.

In some embodiments, as shown in FIG. 10, the fixed seat 205 has a protrusion toward the friction drive wheel 201. The second connecting portion 2034 has a plate-like structure, is vertically arranged at ends, close to the connecting rotation shaft 206, of the first mounting plate portion 2032 and the second mounting portion 2034 (that is, the second connecting portion 2034 connects the first mounting plate portion 2032 with the second mounting plate portion 2033, is arranged at ends close to the connecting rotation shaft 206, and extends along the height direction of the stacker), so that an accommodating space for accommodating the protrusion of the fixed seat 205 is formed among the second connecting portion 2034, the first mounting plate portion 2032, the second mounting plate portion 2033. In the accommodating space, the protrusion of the fixed seat 205 is sandwiched between the first mounting plate portion 2032 and the second mounting plate portion 2033, and the first mounting plate portion 2032, the second mounting plate portion 2033, and the fixed seat 205 can be rotatably connected together by the connecting rotation shaft 206 passing through the first mounting plate portion 2032, the second mounting plate portion 2033, and the protrusion of the fixed seat 205.

In some embodiments, as shown in FIG. 10, a bearing 207 sleeved on the rotation shaft 2011 of the friction drive wheel 201 is further provided in the through hole of the second mounting plate portion 2033, which is used as a supporting rotary component of the rotation shaft 2011 herein. In addition, the second mounting plate portion 2033 is provided with a bearing cover 208 on a side away from the first mounting plate portion 2032, and the bearing cover 208 has a sleeve portion clamped between the bearing 207 and the second mounting plate 2033 along an axial direction of the bearing 207, which provides a position limit for the bearing 207 on the one hand, and has a dust-proof function on the other hand.

In some embodiments, as shown in FIG. 10, a retaining ring 209 is sleeved on the rotation shaft 2011 of the friction drive wheel 201, and the retaining ring 209 abuts against the bearing 207 at an end away from the bearing cover 208. The retaining ring 209 herein is used as a position-limiting part of an outer ring of the bearing 207 to prevent the bearing 207 from moving in an axial direction, and has the advantages of convenient disassembly. In addition, a tensioning sleeve 210 is clamped between the rotation shaft 2011 of the friction drive wheel 201 and the hub 2012 of the friction drive wheel 201, and the tensioning sleeve 210 is configured to firmly lock the hub 2012 of the friction drive wheel 201 to the rotation shaft 2011, which has the functions of a high torque transmission output and self-alignment.

In some embodiments, as shown in FIG. 10, an oil-free bushing 211 is clamped between the connecting rotation shaft 206 and the fixed seat 205. As an intermediate component for the relative rotation of the connecting rotation shaft 206 and the fixed seat 205, the bushing 211 has the advantages of high wear resistance and high pressure resistance, and the bushing 211 can be detected or replaced according to the wear condition during use.

In some embodiments, as shown in FIGS. 1 and 4, a plurality of sliding blocks 106 are mounted at the bottom of the traveling box 100, and each of the sliding blocks 106 is in sliding fit with a guide track 902 on the ground. Specifically, two rows of sliding blocks 106 are arranged at the bottom of the traveling box 100, which are respectively arranged on opposite sides of the friction drive wheel 201 along the width direction of the traveling box 100, and an extension direction of each of the sliding blocks 106 is parallel to the traveling direction of the friction drive wheel 201, so that the sliding blocks 106 and the friction drive wheel 201 can move along the traveling direction of the traveling device simultaneously. In some embodiments, the guide track 902 adopts a low-friction ball guide track to bear the pressure of the entire stacker.

Referring again to FIG. 4, the bottom of the sliding block 106 is provided with a sliding groove that is engaged with the guide track 902, and the guide track 902 can provide the pressure from the stacker to the ground and pulling force for the entire stacker by being engaged with the sliding blocks 106. Specifically, when the pressure of the friction drive wheel 201 exceeds the gravity generated by the weight of the entire stacker, the guide tracks 902 provide a pulling force to prevent the friction drive wheel 201 from continuing to be adjusted downward, and when the pressure of the friction drive wheel 201 is less than the weight of the entire stacker, the weight of the rest of the stacker are supported by the guide tracks 902, thus ensuring the overall stability of the stacker.

In other words, by the engagement of the guide tracks 902 and the sliding blocks 106, due to the inertia of the stacker when the stacker is starting and stopping, the sliding blocks 106 at the front and rear ends of the bottom of the traveling box 106 along the traveling direction are subjected to a pair of opposite forces, that is, a pair of upward supporting force and downward pulling force, provided by the guide tracks 902, so as to prevent the stacker from tilting or swinging in a plane formed by the X-axis and the Z-axis relative to the vertical direction. When the stacker is running and has a tendency to tilt, since the stacker has a certain height in the Z-direction, two sets of sliding blocks 106 clamped on the guide tracks 902 are arranged to provide a pair of opposite forces, that is, another pair of upward supporting force and downward pulling force, so as to prevent the stacker from tilting or swinging to two sides of the friction track 901 in a plane formed by the Y-axis and the Z-axis relative to the vertical direction during operation. During normal operation, the friction wheel 201 applies an appropriate downward pressure to the friction track 901 (generating the friction force required for normal travel), and the friction track 901 shares part of the gravity generated by the weight of the stacker itself, thereby reducing the upward supporting force provided by the guide tracks 902 relative to the stacker and providing restraining force to correct the traveling direction of the stacker (the sliding blocks at the bottom) in a case that the stacker deviates from a predetermined path during traveling.

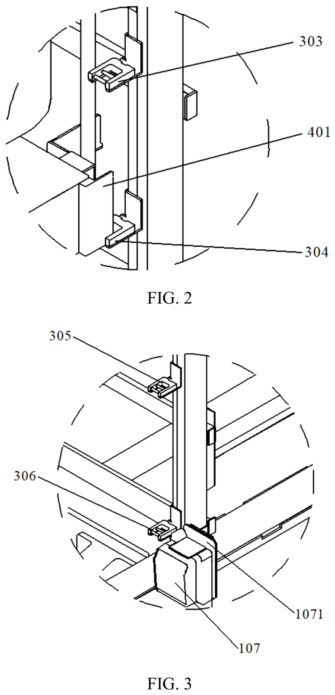

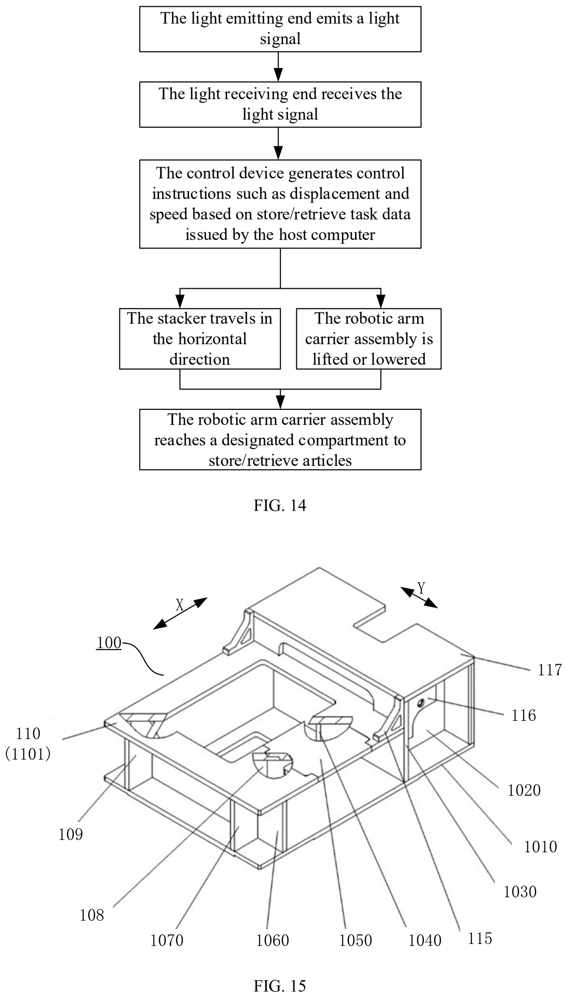

In some embodiments, a light emitting end (not shown) is provided on the traveling path of the stacker and a light receiving end 107 (as shown in FIG. 3) is provided on the stacker, and the light receiving end 107 is fixed to a light receiving end fixed frame 1071. As shown in FIG. 14, in response to the light receiving end 107 receiving a light signal emitted by the light emitting end, the control device 600 is triggered to generate control instructions such as displacement and speed based on an access task data issued by a host computer, so as to control the operation of the traveling power mechanism 202 and the lifting power mechanism 501 based on the control instructions, to further drive the stacker to travel in the horizontal direction, and the robotic arm carrier assembly 400 to be lifted or lowered in the vertical direction, so that the robotic arm carrier assembly 400 of the stacker can reach the designated compartment to place/take out articles. The horizontal positioning assembly 101 and the vertical positioning assembly 401 are required to monitor the running position in real time whether traveling in the horizontal direction or lifting in the vertical direction, and the control device 600 determines whether there is deviation or error in the current position based on the monitoring data fed back by the horizontal positioning assembly 101 and the vertical positioning assembly 401 in real time, so as to determine whether the position needs to be adjusted, thus ensuring the accuracy of the access operation of the stacker.

When the stacker is assembled, the specific process is as follows.
(1) After the guide tracks 902 are mounted in place, the friction track 901 is mounted and adjusted, so that a flatness error between the friction track 901 and the guide tracks 902 does not exceed 0.1 mm. The installation enables the friction drive wheel 201 at the bottom of the stacker to run reliably along the friction track 901, with continuous friction power and stable friction.
(2) The traveling box 100 is fixed to the guide tracks 902 by bolts. Specifically, the traveling box 100 is fixed to the sliding blocks 106 by bolts, the sliding blocks 106 are clamped on the guide track 902, and the sliding blocks 106 are slidably mounted or slidably fixed to the guide tracks 902.
(3) The barcode mounting plate 701 is fixed to the barcode mounting plate bracket 7011, and the position of the barcode mounting plate 701 is adjusted, so that the barcode arranged on the barcode mounting plate 701 can be recognized by the first code scanner on the traveling box 100. The multi-stage deceleration plates are fixed to the barcode mounting plate 701 and are adjusted, so that the deceleration plates can insert in the groove of the grooved photoelectric sensor when the grooved photoelectric sensor runs to the position where the deceleration plates is located. The wireless power-taking assembly is fixed to the wireless power-taking bracket 8012 and is adjusted left and right by the wireless power-taking bracket 8012, so that a distance between the wireless power-taking assembly and the wireless power-taking receiving terminal 8011 on the traveling box 100 is appropriate. The light receiving end 107 is mounted on the lifting frame 300, to be in optical communication with the light emitting end.
(4) The main columns 301 and the auxiliary columns 302 are mounted and fixed to the traveling box 100 by bolts, so that the main columns 301 and the auxiliary columns 30 are perpendicular to the mounting surface of the traveling box 100.
(5) The pulley mounting assembly 704 is mounted to the main columns 301, and the upper guide wheel assembly 703 is mounted to the pulley mounting assembly 704 and the auxiliary columns 302.
(6) The robotic arm carrier assembly 400, the power-supply assembly 802, the synchronous belt 503, the energy-storage assembly 803, and the power-taking assembly 801 are mounted on the main columns 301 and the auxiliary columns 302 respectively.
(7) The sky track 702 is mounted on the lifting frame 300, and the upper guide wheel adjusting screw 7031 is adjusted, so that the upper guide wheel assembly 703 can run along the sky track 702. Specifically, the sky track 702 is mounted at the top of the warehouse to be fit with the top of the lifting frame 300 (the top of the stacker), that is, the upper guide wheel assembly 703 is rollably or slidably connected with the sky track 702.

It should be noted that the specific descriptions of the stacker and the traveling device in the embodiments provided in FIGS. 1 to 14 are also applicable to the following embodiments, as can be seen in the corresponding preceding description.

The existing traveling mechanism at the bottom of the stacker generally adopts steel wheels, and the traveling track is light tracks, which is not only slow in response, but also noisy in operation and dusty in abrasion. Meanwhile, in order to achieve the required speed and acceleration when the steel wheel cooperating with the light track, the steel wheel and the light track are in point contact or line contact with each other, which causes more abrasion dust under the dual effects of gravity and speed.

In addition, in order to save space in the warehouse, a width of the aisle is generally set very small (generally within 600mm), and the occupied area of the stacker is mainly determined by the area of the traveling box at the bottom of the stacker, and thus the structural compactness of the traveling box of the stacker is required to be high.

Embodiments of the present disclosure further provide a traveling box, which is arranged at the bottom of the stacker to drive the entire stacker to travel and to provide power for the lifting mechanism of the stacker.

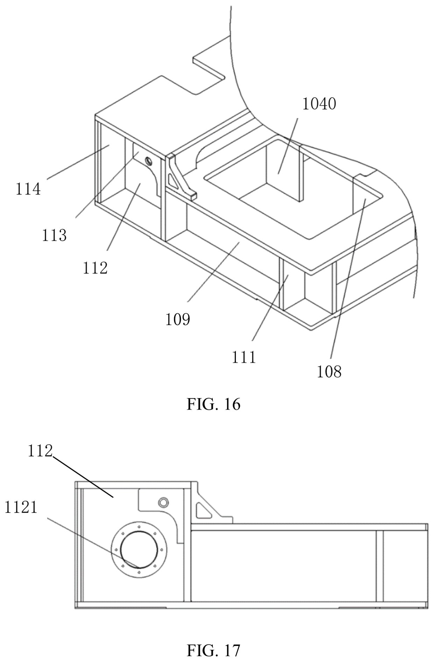

As shown in FIG. 6, FIG. 8, and FIGS. 15 to 19, the traveling box specifically includes a bottom plate 1010 and a box body mounted on a top surface of the bottom plate 1010. A bottom surface of the bottom plate 1010 is configured to mount a plurality of sliding blocks 106 extending along a length direction of the box body of the traveling box. The length direction of the box body of the traveling box is the traveling direction of the stacker (that is, the X-direction), and a width direction of the box body of the traveling box is orthogonal to the length direction in a horizontal plane (that is, the Y-direction).

Specifically, the bottom plate 1010, as a main bearing plate and positioning reference plate, is configured to bear an entire stacker structure on its top surface. Referring to FIG. 8, the bottom surface of the bottom plate 1010 is provided with two rows of sliding block 106 oppositely arranged along the width direction of the box body for being in sliding fit with two rows of linear guide tracks (not labeled) on the ground, so as to bear partial of or all the pressure of the entire stacker by the guide tracks.

Referring again to FIG. 6, FIG. 8, and FIGS. 15 to FIG. 19, in the embodiment of the present disclosure, the box body of the traveling box includes a first box region and a second box region arranged adjacent to each other along the length direction of the box body. The first box region is configured to mount a traveling mechanism for driving the stacker to travel, the traveling mechanism includes a friction drive wheel 201 that passes through the bottom plate 1010 and is in friction fit with a friction track (not shown) on the ground, and a traveling motor (not shown) connected with the friction drive wheel 201. Under the action of the traveling motor, the friction drive wheel 201 drives the entire stacker to travel in the aisle of the warehouse. The traveling motor may be a servo motor, which enables the stacker to be accurately positioned during the traveling, and the wheel surface of the friction drive wheel 201 adopts a high-friction wheel surface, which may be made of a high-elasticity wear-resistant rubber, so as to increase the friction coefficient between the wheel surface and the friction track, and facilitate the rapid response to acceleration and deceleration, prolong the service life of the friction drive wheel, and reduce the generation of dust and noise.

The second box region is configured to accommodate a lifting motor 501, and driving pulleys 502 connected with the lifting motor 501 are respectively mounted on two outer sides of the second box region along the width direction of the box body of the traveling box, and the driving pulleys 502 are configured to drive a lifting belt 503 (referring to FIG. 6) of the stacker to move, so as to drive the carrier assembly carrying material to be lifted or lowered.

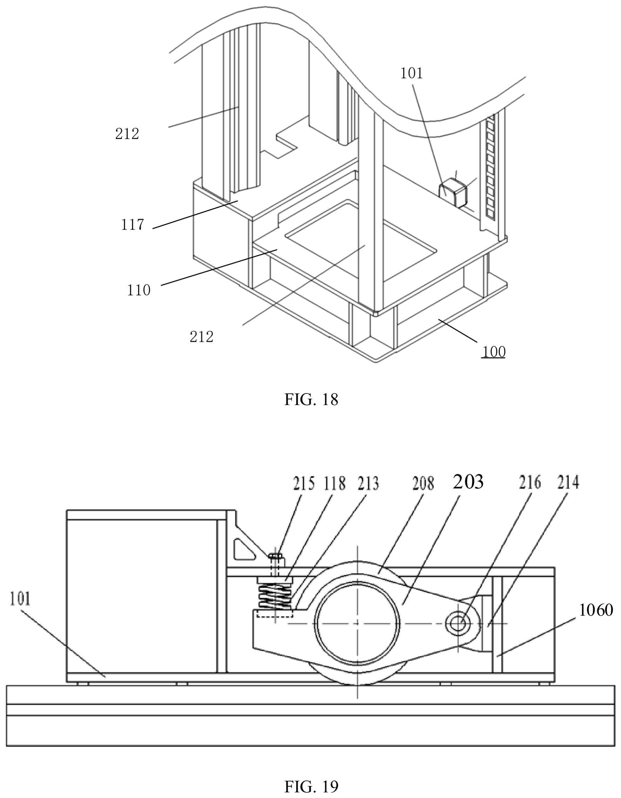

In some embodiments, the first box region includes: a first vertical plate 1030 and a second vertical plate 1060 which are arranged oppositely parallel to each other along the length direction of the box body of the traveling box, and a third vertical plate 109 connected and perpendicular to the first vertical plate 1030 and the second vertical plate 1060. A first accommodating space is formed among the third vertical plate 109, the first vertical plate 1030 and the second vertical plate 1060 for accommodating the traveling mechanism, and a first top plate 110 is transversely arranged at a top end of the first accommodating space. The first vertical plate 1030, the second vertical plate 1060 and the third vertical plate 109 together form supporting elements of the box body of the traveling box, which provides vertical supporting and positioning for the entire box body. The first top plate 110 is configured to support columns 212 (referring to FIG. 18) of the stacker.

In addition, the first box region further includes a fourth vertical plate 1040 having one end vertically connected to the first vertical plate 1030, a fifth vertical plate 108 having one end vertically connected to the second vertical plate 1060, and a sixth vertical plate 1070. The other end of the fourth vertical plate 1040 and the other end of the fifth vertical plate 108 are arranged oppositely and are spaced apart to form a gap in the length direction of the box body of the traveling box for the traveling motor to pass through the gap to be connected with the friction drive wheel 208 (201). The fourth vertical plate 1040, the fifth vertical plate 108 and the sixth vertical plate 1070 can strengthen the stability of the entire box body. The fifth vertical plate 108 and the sixth vertical plate 1070 are provided on different side surfaces of the second vertical plate 1060.

In some embodiments, the first top plate 110 is in a shape of hollow square, and one end of the first top plate 110 is mounted to a side wall of the first vertical plate 1030 and covers the top of the second vertical plate 1060, the top of the third vertical plate 109, the top of the fourth vertical plate 1040, the top of the fifth vertical plate 108, and the top of sixth vertical plate 1070. In some embodiments, the first top plate 110 includes a top plate body 1101, and a third connecting plate 1050 detachably connected with the top plate body 1101, and a position of the third connecting plate corresponds to a position of the gap. Specifically, as shown in FIGS. 15 and 18, the top plate body 1101 covers the top of the second vertical plate 1060, the top of the third vertical plate 109, the top of the fourth vertical plate 1040, the top of the fifth vertical plate 108, and the top of the sixth vertical plate 1070. In order to facilitate installation of parts in the first box region, a notch is provided on the top plate body 1101, which corresponds to the position of the gap between the fourth vertical plate 1040 and the fifth vertical plate 108. In order to strengthen the stability of the first top plate 110, a detachable third connecting plate 1050 is provided at the notch to connect the top plate body 1101 at two ends of the notch into a whole. In some embodiments, the top plate body 1101 is integrally formed.

In some embodiments, the traveling mechanism, in addition to including the friction drive wheel 208 (201) and the traveling motor for driving the friction drive wheel 208 (201) to rotate, as shown in FIG. 8, FIG. 15, FIG. 16, and FIG. 19, may include: a drive wheel supporting seat 203 for supporting the friction drive wheel 208 (201) and an elastic assembly 213 (which may be a high-strength spring, or other elastic element such as an elastic rubber). One end of the drive wheel supporting seat 203 is mounted to the second vertical plate 1060 (specifically mounted to a fixed seat 214 on a side of the second vertical plate 1060) by a transversely arranged rotation shaft 216, and a bottom end of the elastic assembly 213 is fixed to the other end of the drive wheel supporting seat 203. On this basis, the first box region further includes: an elastic assembly supporting plate 118 transversely connected between the third vertical plate 109 and the fourth vertical plate 1040, and the elastic assembly supporting plate 118 is configured to mount an adjustable fixing member 215 (2041 in FIG. 8) for a bottom end of the fixing member 215 (2041) to pass through the elastic assembly supporting plate 118 to be fixed to a top end of the elastic assembly 213. In some embodiments, the fixing member 215 (2041) may be an adjusting screw. During operation, downward movement of the fixing member 215 (2041) by rotating the adjustable fixing member 215 (2041) compresses the elastic assembly 213, and the elastic assembly 213 transmits the pressure to the drive wheel supporting seat 203 after being compressed, and then to the friction drive wheel 208 (201), so that the friction drive wheel 208 (201) rolls on the friction track on the ground under the torque of the traveling motor and the pressure of the elastic assembly 213. The friction force between the friction drive wheel 208 (201) and the friction track can be adjusted by adjusting a depth of downward movement of the fixing member 215 (2041), so as to meet the needs of different application scenarios.

In some embodiments, as shown in FIG. 15, the first box region further includes a cable-stayed plate 115, one end of the cable-stayed plate 115 is fixed to the first top plate 110, and the other end is fixed to the first vertical plate 1030, so as to enhance the stability of the box body of the traveling box.

In some embodiments, as shown in FIG. 8, the first top plate 110 is further configured to mount a code reader assembly 101 on one side for scanning a positioning barcode on the traveling path of the stacker, so as to identify information about the location where the stacker is currently located.

In some embodiments, as shown in FIGS. 8 and 15, the second vertical plate 1060 is further configured to mount a deceleration trigger assembly 2060 on a side. The deceleration trigger assembly 2060 is, for example, a grooved photoelectric sensor configured to output a trigger signal, which causes the traveling motor to drive the friction drive wheel 208 (201) to decelerate in response to sensing a preset deceleration condition, so as to ensure safe operation of the stacker.

In some embodiments, as shown in FIGS. 8 and 15, an outer side surface of the third vertical plate 109 is further configured to support the power-taking assembly 801 mounted on the bottom plate 1010. In some embodiments, the power-taking assembly 801 may be a wireless power-taking assembly, which can meet 100-class dust-free requirements and has a longer service life than a drag chain power supply, and a bracket for the wireless power-taking assembly may be welded and machined from stainless steel, with excellent strength and simple installation.

In some embodiments, as shown in FIGS. 6, 8, and 15 to 19, the second box region includes a seventh vertical plate 1020 and an eighth vertical plate 112 arranged oppositely parallel to each other along the width direction of the box body of the traveling box, and a second top plate 117 covering the top of the seventh vertical plate 1020 and the top of the eighth vertical plate 112. The second top plate 117 is configured to support columns of the stacker, and a notch is formed on the second top plate 117 for the lifting motor 501 to pass through. A second accommodating space is formed between the seventh vertical plate 1020 and the eighth vertical plate 112 for accommodating the lifting motor 501, the seventh vertical plate 1020 and the eighth vertical plate 112 are configured to support the lifting motor 501, and the driving pulleys 502 are symmetrically mounted on an outer surface of the seventh vertical plate 1020 and an outer surface of the eighth vertical plate 112.

Specifically, two bearings are provided on two opposite sides of the lifting motor 501 respectively, and coaxial bearing mounting holes 1121 are provided in the seventh vertical plate 1020 and the eighth vertical plate 112 for mounting the corresponding bearings, and mounting positions of the driving pulleys 502 on the outer surfaces of the seventh vertical plate 1020 and the eighth vertical plate 112 correspond to positions of bearing mounting holes 1121, so the coaxiality of the two bearing mounting holes is the key to the smooth lifting action of the stacker.

In some embodiments, reinforcing plates 116 located diagonally above the driving pulleys 502 are symmetrically provided on the outer side of the seventh vertical plate 1020 and the outer side surface of the eighth vertical plate 112. Each reinforcing plate 116 is configured to mount an adjusting wheel 506 acting on the lifting belt 503. The adjusting wheel 506 plays a tensioning role relative to the lifting belt 503 on the one hand, and adjusts a direction of the belt on the driving pulley 502 on the other hand, so that the belt runs inside the column under the action of the adjusting wheel, as shown in FIG. 6.

In the embodiments of the present disclosure, the bottom plate, the vertical plates, the top plates, and other components of the traveling box may be installed in the form of splicing, which avoids a large amount of molding cost, and is adjustable in the installation. Positioning holes and connecting holes needs to be provided on the top surface of the bottom plate 1010 to position and mount the vertical plates, so as to realize accurate installation in position. Positioning holes and connecting holes also needs to be provided on the vertical plates, so as to ensure the installation perpendicularity between the vertical plates and the bottom plate 1010.

In the embodiments of the present disclosure, a conversion mechanism 5011 is provided in the second box region, the lifting motor 501 passes through the notch on the second top plate 117 and is in transmission connection with the conversion mechanism 5011, and the conversion mechanism 5011 (for example, a reducer) has two output shafts 5012, which are connected with the driving pulleys 502 located on two sides of the second box region, respectively. The two output shafts 5012 rotate driving pulley shaft 5012, and the driving pulley shafts 5012 in turn rotate the driving pulleys 502.

Embodiments of the present disclosure further provide a stacker, as shown in FIG. 6, which includes the traveling box described as above and a stacking body arranged at the top of the traveling box.

In the embodiments of the present disclosure, the traveling box of the stacker has a compact and reasonable structural layout, and can accommodate the traveling mechanism, the driving pulleys, and the lifting motor in a small space, so that the stacker can be applied to a narrow aisle. In addition, the traveling box is configured to mount a friction drive wheel in fit with the friction track instead of the conventional steel wheel in fit with the light track, so as to meet the requirements of the high response speed of the stacker and reduce the noise. Meanwhile, since the friction drive wheel travels on the friction track with surface contact, wear be reduced compared to point contact and line contact, thereby reducing generation of dust and being suitable for a dust-free environment with high cleanliness requirements. In addition, the pressure of the entire stacker can be borne by the engagement of the sliding blocks at the bottom of the bottom plate and the guide tracks on the ground.

It should be noted that the specific descriptions of the stacker and the traveling device in the embodiment provided in FIGS. 1 to 14, and the specific descriptions of the traveling box in the embodiments provided in FIGS. 6, 8 and 15 to 19, are also applicable to the following embodiments, as described in the corresponding descriptions in the foregoing.

The traveling mechanism at the bottom of the existing stacker adopts belt transmission, rack-and-pinion transmission or steel wheel transmission. In the semiconductor manufacturing, the structure of the stacker is complicated, the stacker with the carried article is heavy, the running stroke is long, the installation space is limited, and the requirement for running accuracy is high. When the belt transmission is used, since the belt is an elastic body that is easy to age or break, frequent maintenance and overhaul are required. When the rack-and-pinion transmission is used, it is easy to generate dust from wear of the toothed surfaces to pollute the production environment, and the rack-and-pinion transmission has a high operating noise. When the steel wheel transmission is used, the response speed is slow, and the operating noise is loud. Based on the above, the embodiments of the present disclosure further provide a drive wheel type friction transmission mechanism for the stacker, which can meet the requirements for high response speed to acceleration and deceleration of the traveling device, with low operating noise, easy maintenance, and less abrasion dust, and is suitable for a dust-free production environment with high cleanliness requirements.

Specifically, the embodiments of the present disclosure further provide a traveling device for a stacker, as shown in FIGS. 9, 10, 20, and 21, which includes a traveling box 100 arranged at the bottom of a stacker (not shown) and a friction transmission mechanism mounted in the traveling box 100. The traveling box 100 provides a bearing surface for the friction transmission mechanism.

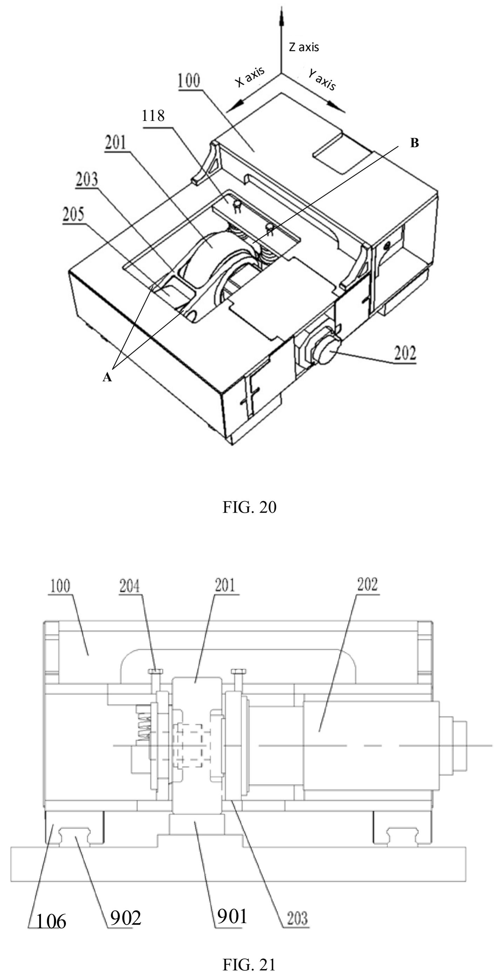

In some embodiments, the friction transmission mechanism provides the traveling power source of the stacker, which mainly includes a drive wheel 201, a drive motor 202, and a drive wheel supporting seat 203. The drive wheel 201 passes through a bottom plate of the traveling box 100 and is in friction fit with a friction track 901 (referring to FIG. 21) on the ground. The drive motor 202 is connected with the drive wheel 201 and is configured to drive the drive wheel 201 to rotate, and the drive wheel supporting seat 203 is configured to support the drive wheel 201. The drive motor 202 may adopt a deceleration motor, which has advantages of accurate operation and positioning, and timely response to acceleration and deceleration.

In some embodiments, as shown in FIG. 10, the drive wheel 201 specifically includes a rotation shaft 2011, a hub 2012, and a wheel surface 2013. The rotation shaft 2011, and the hub 2012 of the drive wheel 201 are made of stainless steel, carbon steel, aluminum alloy and other materials, which can enhance the anti-rust and anti-pollution ability in a case of being made of stainless steel and reduce the overall weight of the drive wheel 201 in a case of being made of aluminum alloy. The wheel surface 2013 of the drive wheel 201 adopts a high-friction wheel surface (the friction coefficient µ satisfies, for example, 0.3≤µ≤0.45), and can be made of high-elasticity wear-resistant rubber, so as to increase the friction coefficient between the wheel surface 2013 and a friction track 901, which can facilitate quick response to acceleration and deceleration, prolong the service life, reduce the generation of dust, and minimize the noise. In addition, in the existing technology, in order to achieve the required speed and acceleration, the steel wheel and the light track are in point contact or line contact, which causes more abrasion dust under the dual action of gravity and speed. On the contrary, the drive wheel 20 of the present disclosure travels on the friction track 901 with surface contact, and the drive wheel 201 adopts a high-friction wheel surface, which can reduce the generation of abrasion dust and can be used in a dust-free environment with high cleanliness requirements.

In some embodiments, the friction track 901, in fit with the drive wheel 201, may be machined from an aluminum alloy track, so as to ensure that the track has a good flatness, minimize wear and tear of the drive wheel 201 during operation, and reduce environmental dust generated during operation.

In the embodiments shown in FIGS. 9, 10, 20, and 21, one end of the drive wheel supporting seat 203 (that is, end A in FIG. 20) is rotatably fixed in the traveling box 100, and the other end of the drive wheel supporting seat 203 (that is, end B in FIG. 20) is fixed in the traveling box 100 by the elastic assembly 204 vertically arranged above the drive wheel supporting seat 203, thereby forming a lever structure, and the downward pressure exerted by the elastic assembly 204 enables the drive wheel 201 to travel on the friction track 901, and vibration damping can be realized by the action of the elastic assembly 204. The vertical direction is a direction extending along a height of the traveling box, that is, the Z-axis direction as shown in FIG. 20.

Specifically, a fixed seat 205 is provided on a side wall along the width direction of the traveling box 100, and one end of the drive wheel supporting seat 203 is rotatably connected with the fixed seat 205 by a connecting rotation shaft 206, so that the drive wheel 201 can swing around the connecting rotation shaft 206 and the fixed seat 205. As shown in FIG. 10, the rotation shaft 2011 of the drive wheel 201 is set to be coaxially connected with the output shaft of the traveling power mechanism 202, so that the rotation shaft 2011 of the drive wheel 201 rotates synchronously when the output shaft of the drive motor 202 rotates, thereby driving the drive wheel 201 to roll forward along the friction track 901. In some embodiments, the connecting rotation shaft 206 is set to be parallel to the rotation shaft 2011 of the drive wheel 201, so that the drive wheel 201 can move up and down by the swinging of the drive wheel supporting seat 203 to adapt to the change of the traveling surface of the track 901 when the friction track 901 is uneven. In some embodiments, the fixed seat 205 is made of stainless steel, which has anti-corrosion and anti-rust functions. The fixed seat 205 is fixed to the side wall of the traveling box 100 by screws during installation.

In the embodiments shown in FIGS. 9, 10, 20, and 21, the elastic assembly 204 is configured to generate a stable and controllable pressure between the drive wheel 201 and the friction track 901, and mainly includes an elastic element and an elastic force adjusting mechanism. The elastic element is arranged vertically and a bottom end of the elastic element is connected to a top surface of the other end of the drive wheel supporting seat 203. The elastic force adjusting mechanism is connected with a top end of the elastic element and is configured to adjust an elastic force generated by the elastic element. By adjusting the elastic force of the elastic element using the elastic force adjusting mechanism, the pressure applied to the other end of the drive wheel supporting seat 203 can be adjusted, and thus the pressure of the drive wheel 201 on the friction track 901 can be adjusted, so as to meet the different use requirements.

Referring specifically to FIG. 9, a position-limiting plate 118 is provided in the traveling box 100, and the position-limiting plate 118 is transversely arranged above the elastic element. The elastic force adjustment mechanism includes a fixing member 2041 that is vertically arranged and in threaded fit with the position-limiting plate 118, and a bottom end of the fixing member 2041 is connected with the top end of the elastic element. The position-limiting plate 118 is configured herein to bear the reaction force of the elastic element acting on the fixing member 2041, and has the function of bending resistance and preventing the relative movement of the fixing member 2041. In some embodiments, the fixing member 2041 adopts a standard fine thread screw, which is simple to process and mold, and can bear high pressure without loosening easily. The transverse direction is the direction extending along the width of the traveling box, as shown in the Y-axis direction in FIG. 20.

Referring again to FIG. 9, the elastic element includes: an elastic element body 2042, a first clamping plate 2043 in snap fit with a top end of the elastic element body 2042, and a second clamping plate 2044 in snap fit with a bottom end of the elastic element body 2042. The first clamping plate 2043 is fixedly connected with the bottom end of the fixing member 2041 of the elastic force adjusting mechanism, and the second clamping plate 2044 is fixedly connected with the other end of the drive wheel supporting seat 203 by bolts. The elastic element body 2042 can adopt a high-strength spring, which can ensure the stability of the pressure applied to the drive wheel 201. The first clamping plate 2043 and the second clamping plate 2044, as the position-limiting supporting mechanism at two ends of the elastic element, can prevent the elastic element body 2042 from being falling out of position when compressed. It should be understood that the elastic element body 2042 is not limited to the high-strength spring, and can adopt any other suitable elastic body, such as elastic rubber, without any specific limitation.

In some embodiments, as shown in FIG. 9, the elastic assembly 204 further includes a scale 2045 vertically mounted to a top surface of the position-limiting plate 118, and the scale 2045 is arranged adjacent to and parallel to the fixing member 2041. When the fixing member 2041 is adjusted up or down, the scale 2045 can reflect an adjustment amount in real time, which facilitates precise application of the desired pressure to the drive wheel 201.

In some embodiments, the drive wheel supporting seat 203 is configured to provide a mounting space for the drive wheel 201, and as shown in FIG. 10, includes a connecting portion, a first mounting plate portion 2032, and a second mounting plate portion 2033 which are integrally formed. The first mounting plate portion 2032 and the second mounting plate portion 2033 are connected by the connecting portion and symmetrically arranged along a longitudinal direction (the longitudinal direction is the width direction of the traveling box, as shown in the Y-axis direction in FIG. 20), so that the drive wheel 201 is fixed in a space defined by the first mounting plate portion 2032 and the second mounting plate portion 2033, and the rotation shaft 2011 of the drive wheel 201 is orthogonal to the mounting plate portion 2032 and the second mounting plate portion 2033. A housing of the drive motor 202 is fixedly connected with a side, away from the second mounting plate portion 2033, of the first mounting plate portion 2032 by screws, the first mounting plate portion 2032 and the second mounting plate portion 2033 are further provided with coaxial through holes respectively, and the output shaft of the drive motor 202 passes through the through hole of the first mounting plate portion 2032 to be connected with one end of the rotation shaft 2011 of the drive wheel 201, and the other end of the rotation shaft 2011 of the drive wheel 201 extends through the through hole of the second mounting plate portion 2033. The drive wheel supporting seat 203 enables the drive wheel 201 to operate more stably.

Referring again to FIG. 10, one end of the first mounting plate portion 2032 and one end of the second mounting plate portion 2033, together as one end (that is, end A) of the drive wheel supporting seat 203, are rotatably connected with the connecting rotation shaft 206. The connecting portion includes a first connecting plate 2031 and a second connecting plate 2034, the other end of the first mounting plate portion 2032 and the other end of the second mounting plate portion 2033 are connected by the first connecting plate 2031, so the first connecting plate 2031 can be connected with the elastic assembly 204 as the other end (that is, end B) of the drive wheel supporting seat 203.

In some embodiments, two elastic assemblies 204 are provided, both of the two elastic assemblies 204 are arranged oppositely above the first connecting plate 2031 along the width of the traveling box. It should be understood that in order to ensure stable operation of the drive wheel 201, the pressure applied to the drive wheel 201 by the two elastic assemblies 204 should be the same.

In some embodiments, as shown in FIG. 10, the fixed seat 205 has a protrusion toward the drive wheel 201. The second connecting portion 2034 is vertically arranged at ends, close to the connecting rotation shaft 206, of the first mounting plate portion 2032 and the second mounting portion 2033, (that is, the second connecting plate 2034 connects the first mounting plate portion 2032 with the second mounting plate portion 2033, is arranged at ends close to the connecting rotation shaft 206, and extends along the height direction of the stacker), and an accommodating space for accommodating the protrusion of the fixed seat 205 is formed by the first mounting plate portion 2032, the second mounting plate portion 2033 and the second connecting plate 2034. In the accommodating space, the protrusion of the fixed seat 205 is sandwiched between the first mounting plate portion 2032 and the second mounting plate portion 2033, and the first mounting plate portion 2032, the second mounting plate portion 2033, and the fixed seat 205 can be rotatably connected together by the connecting rotation shaft 206 passing through the first mounting plate portion 2032, the second mounting plate portion 2033, and the protrusion of the fixed seat 205.

In some embodiments, as shown in FIG. 10, a bearing 207 sleeved on the rotation shaft 2011 of the drive wheel 201 is further provided in the through hole of the second mounting plate portion 2033, which is used as a supporting rotary component of the rotation shaft 2011 herein. In addition, the second mounting plate portion 2033 is provided with a bearing cover 208 on a side away from the first mounting plate portion 2032, and the bearing cover 208 has a sleeve portion clamped between the bearing 207 and the second mounting plate 2033 along an axial direction of the bearing 207, which provides a position limit for the bearing 207 on the one hand, and has a dust-proof function on the other hand.

In some embodiments, as shown in FIG. 10, a retaining ring 209 is sleeved on the rotation shaft 2011 of the drive wheel 201, and the retaining ring 209 abuts against the bearing 207 at an end away from the bearing cover 208. The retaining ring 209 herein is used as a position-limiting part of an outer ring of the bearing 207 to prevent the bearing 207 from moving in an axial direction, and has the advantages of convenient disassembly. In addition, a tensioning sleeve 210 is clamped between the rotation shaft 2011 of the drive wheel 201 and the hub 2012 of the drive wheel 201, and the tensioning sleeve 210 is configured to firmly lock the hub 2012 of the drive wheel 201 to the rotation shaft 2011, which has the functions of a high torque transmission output and self-alignment.

In some embodiments, as shown in FIG. 10, an oil-free bushing 211 is clamped between the connecting rotation shaft 206 and the fixed seat 205. As an intermediate component for the relative rotation of the connecting rotation shaft 206 and the fixed seat 205, the bushing 211 has the advantages of high wear resistance and high pressure resistance, and he bushing 211 can be detected or replaced according to the wear condition during use.

In some embodiments, as shown in FIG. 21, a plurality of sliding blocks 106 are mounted at the bottom of the traveling box 100, and each of the sliding blocks 106 is in sliding fit with a linear guide track 902 on the ground. Specifically, two rows of sliding blocks 106 are arranged at the bottom of the traveling box 100, which are respectively arranged on opposite sides of the drive wheel 201 along the width direction of the traveling box 100, and an extension direction of each of the sliding blocks 106 is parallel to the traveling direction of the drive wheel 201, so that the sliding blocks 106 and the drive wheel 201 can move along the traveling direction of the traveling device simultaneously.

Referring again to FIG. 21, the bottom of the sliding block 106 is provided with a sliding groove that is engaged with the linear guide track 902, and the linear guide track 902 can provide pressure from the stacker to the ground and pulling force for the entire stacker by being engaged with the sliding blocks 106. Specifically, when the pressure of the drive wheel 201 exceeds the gravity generated by the weight of the entire stacker, the linear guide track 902 provides a pulling force to prevent the drive wheel 201 from continuing to be adjusted downward, and when the pressure of the drive wheel 201 is less than the weight of the entire stacker, the weight of the rest of the stacker are supported by the linear guide tracks 902, thus ensuring the overall stability of the stacker.

Referring to FIGS. 9, 10, and 20 to 22, when the friction transmission mechanism is in use, firstly, the fixing member 2041 is adjusted to move downward, and the downward movement of the fixing member 2041 drives the first clamping plate 2043 to move downward. The downward movement of the first clamping plate 2043 compresses the elastic element body 2042, and the elastic element body 2042 transmits the pressure F to the lower second clamping plate 2044 after the elastic element body 2042 is compressed, then the pressure F is transmitted to the drive wheel supporting seat 203 by the second clamping plate 2044, and then the pressure F is transmitted to the drive wheel 201 by the drive wheel supporting seat 203. The drive wheel 201 rolls on the friction track 901 under the torque of the drive motor 202 and the pressure of the drive wheel supporting seat 203. The value of the downward pressure of the fixing member 2041 may be reflected by the reading of the scale 2045.

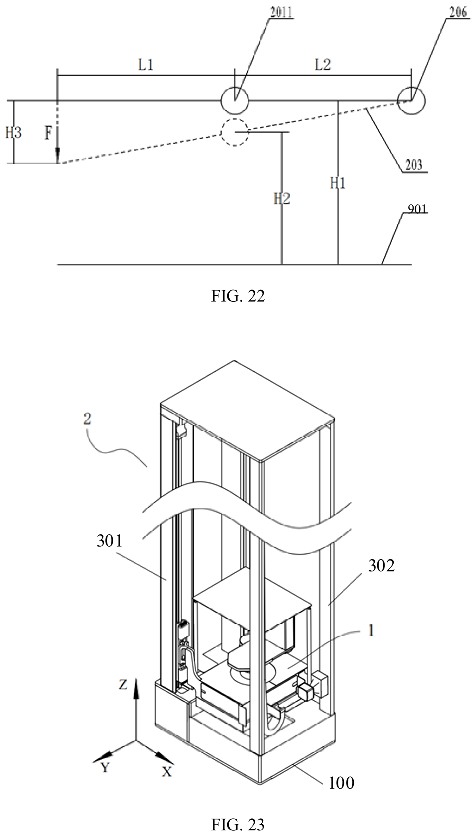

In some embodiments, as shown in FIG. 22, when the drive wheel supporting seat 203 transmits the pressure F to the drive wheel 201, a distance from the rotation shaft 2011 of the drive wheel 201 to the friction track 901 decreases from H1 to H2, and a difference between H1 and H2 is the amount of compression of the wheel surface 2013 of the drive wheel 201 caused by the pressure F. A distance from the rotation shaft 2011 of the drive wheel 201 to a specific point on the top surface of the other end of the drive wheel supporting seat 203 is L1, and the specific point is a center point of circular domain where the elastic element body 2042 is projected onto the top surface of the other end of the drive wheel supporting seat 203 in the Z-axis direction. A distance from the rotation shaft 2011 of the drive wheel 201 to the connecting rotation shaft 206 is L2. When the pressure F is transmitted to the drive wheel supporting seat 203, a distance from the specific point on the top surface of the other end of the drive wheel supporting seat 203 to the friction track 901 decreases by H3. When the pressure F is generated by adjusting the fixing member 2041, the condition (H1-H2)/H3=L2/(L1+L2) is satisfied. In the embodiments of the present disclosure, the traveling device replaces the conventional transmission mechanism with the fit of the light track and the steel wheel by adopting a friction transmission mechanism, and the wheel surface 2013 of the drive wheel 201 in the friction transmission mechanism adopts a high-friction wheel surface, so as to satisfy the high response speed of the stacker, and reduce noise and generation of dust, and be suitable for a dust-free environment with high cleanliness requirements. Meanwhile, the sliding blocks 106 at the bottom of the traveling box 100 are in fit the linear guide tracks 902 on the ground to bear the pressure of the stacker located thereon, and can exert a pulling force on the traveling box 100 when the weight of the stacker is light, so as to keep the stability of the stacker.

In addition, the embodiments of the present disclosure provide a stacker including a traveling device as described above and a stacking body arranged at the top of the traveling box. Since the stacker includes the above traveling device, the requirements of high response speed of the stacker can be satisfied and the noise can be reduced. Meanwhile, since the drive wheel travels on the friction track with surface contact and the drive wheel adopts a high-friction wheel surface, the generation of abrasion dust can be reduced, thereby being suitable for a dust-free environment with high cleanliness requirements.

It is to be noted that the specific descriptions of the stacker and the traveling device in the embodiments provided in FIGS. 1 to 14 are also applicable to the following embodiments, as can be seen in the corresponding previous description.

In the fabrication of a semiconductor factory, the number of wafer boxes is extremely large, storage and transportation of the wafer boxes is a very important link. A wafer box storage stereoscopic warehouse is the key equipment to solve such a problem, and the core of the wafer box storage stereoscopic warehouse equipment is the stacker with the high speed and high precision operation inside the equipment.

The existing stacker has the following problems: insufficient positioning accuracy due to high running speed, or slow running speed due to guaranteed positioning accuracy.

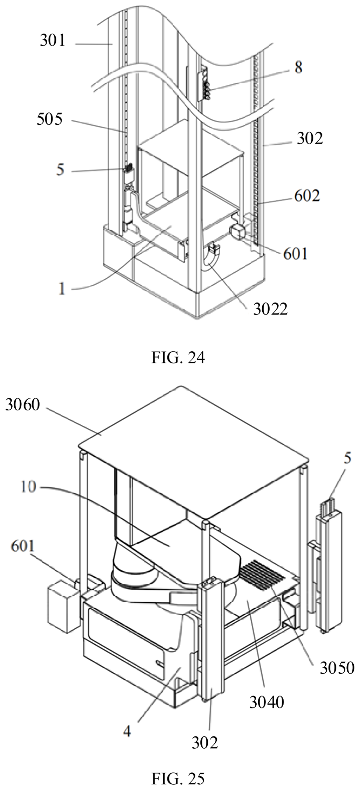

The stacker of the wafer box storage stereoscopic warehouse equipment is the key equipment for storing and transporting the wafer boxes. In order to solve the problem that the running speed does not match the positioning accuracy and the cable is difficult to quickly overhaul and maintain, a lifting box mechanism of the stacker of the semiconductor storage stereoscopic warehouse equipment is provided in the embodiments of the present disclosure. As shown in FIG. 23 and FIG. 24, the stacker includes a column bracket and a transmission mechanism, the column bracket includes a main column 301 and an auxiliary column 302 fixed relative to the main column 301, the auxiliary column 302 and the main column 301 are arranged parallel to each other in a vertical direction, and the transmission mechanism drives the lifting box mechanism to be lifted or lowered in the vertical direction (the vertical direction is defined as the Z-axis direction). The lifting box mechanism includes the lifting box 1 slidably carried on the column bracket and a position monitoring device 6 for obtaining a height position of the lifting box 1 in real time. The lifting box 1 is configured to carry a manipulator for clamping a wafer box. The whole lifting box 1 is driven to be lifted or lowered by the transmission mechanism, the running speed of the lifting box 1 is controlled, and the position information of the lifting box 1 is monitored in real time by the arranged position monitoring device 6, so as to ensure the running accuracy of the lifting box 1. The position monitoring device 6 obtains the real-time position of the lifting box 1, and can further adjust the height position of the lifting box 1 by the transmission mechanism.

Specifically, as shown in FIG. 24, the position monitoring device 6 includes a position monitoring module 601 arranged at a side end of the lifting box 1 and a position reading module 602 arranged on the auxiliary column 302 or the main column 301, and the position monitoring module 601 faces the position reading module 602 for reading position information of the position reading module 601 in real time.

According to the present disclosure, in response to the fact that during the process of transporting the wafer box by the lifting box 1, a deviation in the accuracy of the lifting position of the lifting box 1 may occur due to a large stroke, and a large deviation may lead to the risk of collision and falling down of the wafer boxes. Therefore, the position of the lifting box 1 is fed back in real time by providing the position monitoring module 601 and the position reading module 602, so that the running accuracy and running speed of the lifting box 1 are ensured (that is, the running accuracy of the lifting box 1 is taken into account without lowering the running speed of the lifting box 1).

In some preferred embodiments, as shown in FIGS. 23 and 24, the column bracket is box-shaped, including two auxiliary columns 302 and two main columns301 set in pairs, and the four columns are located at the four corners of the column bracket. The four columns are connected by connection structures at an upper end and a lower end, so as to form the box-shaped column bracket. The columns are not shielded from each other, so that the structure is simple and intuitive, the current state of the lifting box 1 can be visually viewed, which facilitates the operators to disassemble and replace the lifting box 1. As shown in FIG. 24, the auxiliary columns 302 includes a first auxiliary column and a second auxiliary column which are oppositely arranged.

Since the movement stroke of the lifting box of the stacker is long, the lifting box always moves synchronously with cables connected with a main cabinet of the stacker during the lifting or lowering of the lifting box, and the cables are an important factor causing problems. When a problem occurs with the cables, the maintenance time is generally very long. Furthermore, in some embodiments, the column bracket is provided with a cable plug interface 8, and the lifting box 1 is connected with a cable 3010. One end of the cable 3010 is lifted or lowered synchronously with the lifting box 1, and the other end of the cable 3010 is provided with a cable plug structure, which can be detachably plugged into the cable plug interface 8. The cable plug structure can be arranged as an electric plug structure in plugging fit with the cable plug interface 8. According to the present disclosure, for the problems that the cable of the lifting box needs to move up and down frequently during working, an inner core of the electric cable that often moves is easy to break, and the maintenance time is long, the cable plug structure for realizing the quick electrical loading and unloading of the lifting box 1 is provided on the lifting box 1, so as to realize the quick connection or disconnection of the electrical structures of the lifting box 1 and the stacker. The plug structure of the cable plug interface 8 can shorten the maintenance time, and has high practicability (the electrical structure can be disconnected by pulling out the cable 3010 during emergency fault handling, which facilitates quick disassembly of the entire faulty lifting box 1, thus replacing the spare lifting box for emergency use, and then searching the faulty lifting box 1).

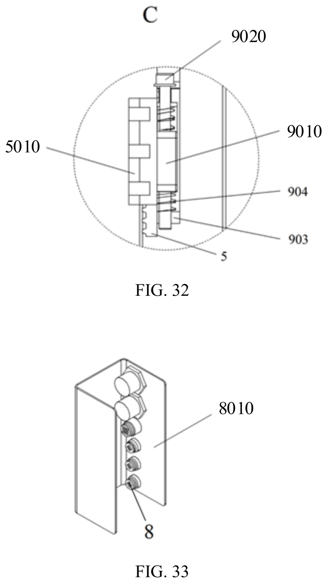

In some embodiments, the cable plug interface 8 is fixedly mounted on the first auxiliary column, the cable plug interface 8 and the cable 3010 are arranged on a side away from the transmission belt 5, so as to prevent the cable 3010 from interfering with the transmission belt 5. The cable 3010 is provided with a drag chain 3022 for protection, and the drag chain 3022 can play a dustproof role. One end of the drag chain 3022 is connected to a box body 3 (representing a movable end) of the lifting box 1, and the other end is connected to the first auxiliary column (representing a fixed end) of the auxiliary column 302, and the cable 3010 in the drag chain 3022 is lifted or lowered with the lifting box 1 in the drag chain 3022. As shown in FIGS. 24 and 33, the cable plug interface 8 is detachably mounted on the first auxiliary column by means of an interface bracket 8010 (which is in C-shaped). As shown in FIG. 25, the drag chain 3022 is fixed to the box body 3 of the lifting box 1 and the first auxiliary column by means of a drag chain bracket, respectively.

In some preferred embodiments, the cable plug interface 8 is preferably fixed at a middle position of the first auxiliary column of the auxiliary column 302, and one end of the cable 3010 is lifted or lowered synchronously with the lifting box 1. Arranging the cable plug interface 8 at the middle position has the advantages of saving overall configuration length of the cable 3010 and the drag chain 3022, and reducing cost.

In some preferred embodiments, the position monitoring module 601 is a code scanner, the position reading module 602 is a barcode band vertically distributed on the second auxiliary column, and the barcode band may be a one-dimensional code or a two-dimensional code, and the two-dimensional code is preferred in this embodiment. As shown in FIG. 24, a scanning range of the code scanner is directly opposite to the barcode band. During the upward lifting and downward lowering of the lifting box 1, a real-time position information of the lifting box 1 is determined by scanning the two-dimensional code barcode band using the code scanner, so that a deviation in position generated when the lifting box is lifted or lowered can be detected and corrected in time.

Two auxiliary columns 302 are provided according to the present disclosure, which are mainly configured to mount the drag chain 3022, the cable insertion interface 8, and the position reading module 602 (the two-dimensional code) respectively, and the same function can be realized when the structures are mounted on one auxiliary column 302. Therefore, the number of the auxiliary columns 302 is not specifically limited, as long as the reading of the code and the quick plugging and unplugging of the cable can be realized.

It should be noted that the column bracket is preferably box-shaped, that is, provided with four columns. The cable plug interface 8 is preferably configured to be mounted on the first auxiliary column of the auxiliary column 302, but it is not limited to only being mounted on a particular auxiliary column 302, and may be mounted on a particular main column 301. Similarly, the position reading module 602 is preferably configured to be mounted on the second auxiliary column of the auxiliary column 302, but is not limited to only being mounted on a certain auxiliary column 302, and may be mounted on a certain main column 301.

For example, the column bracket may further be provided with two main columns 301 and one auxiliary column 302, the cable plug interface 8 is mounted on the auxiliary column 302, and the drag chain 3022 and the position reading module 602 are mounted on different surfaces of the auxiliary column 302.

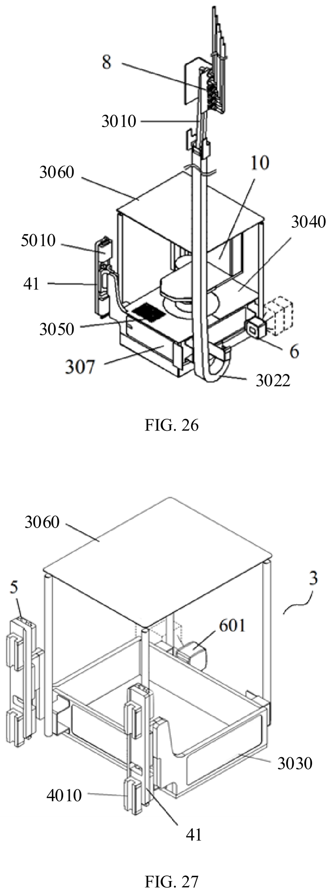

The transmission mechanism may adopt a drive method such as a pulley transmission, a rack-and-pinion transmission, a screw transmission, etc., all for the purpose of realizing the lifting or lowering of the box body 3 of the lifting box 1 in the vertical direction. In some embodiments, the transmission mechanism is a pulley transmission. As shown in FIG. 27, the box body 3 of the lifting box 1 is provided with a fourth connecting plate 41 on a side close to the main column 301, and a transmission belt 5 of the transmission mechanism is mounted on the fourth connecting plate 41 and is arranged in the vertical direction. The transmission belt 5 has two ends, and the two ends of the transmission belt 5 are respectively mounted on the fourth connecting plate 41 by two connecting fasteners 5010 symmetrically arranged in the vertical direction. The transmission belt 5 is configured to drive the box body 3 of the lifting box 1 to be lifted or lowered. The lifting box 1 detects the position in real time by the code scanner and the barcode band of the position monitoring device 6, and the position of the lifting box 1 is adjusted by controlling the lifting or lowering of the transmission belt 5, so as to ensure the accuracy of the position of the lifting box 1. The transmission belt 5 can be driven to be lifted or lowered by the drive motor and the pulley.

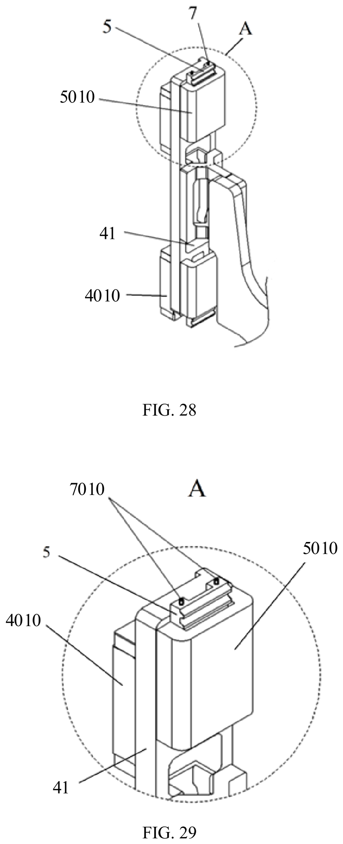

With respect to the problem that when the lifting box 1 of the stacker is driven by the transmission belt 5, the transmission belt 5 may break due to aging, wear and tear during transporting the wafer boxes, which may lead to damage to the wafer, in some embodiments, as shown in FIG. 29, a transmission belt state monitoring element 7 is built in the transmission belt 5 for detecting whether the transmission belt 5 is in an abnormal state. The transmission belt state monitoring element 7 is configured as a metal core wire 7010 for forming an electrical circuit, and each transmission belt 5 is provided with two metal core wires 7010.

In an implementation, a complete electrical circuit is formed by the metal core wires 7010 and the necessary connecting wires. The continuous state of the transmission belt 5 can be determined and fed back in real time according to the working state of the electrical circuit (for example, the numerical changes of the circuit voltage of the circuit can be detected), and the abnormal state (for example, breakage) of the transmission belt 5 can be reflected in time by an abnormality of the electrical circuit, which facilitates timely maintenance of the transmission mechanism. By setting the metal core wire 7010 to form the electrical circuit for real-time monitoring, the safety of the running of the lifting box is improved, and the risk of collision and falling down of the wafer box during transporting the wafer box is reduced, which indirectly reduces the maintenance cost.

In some embodiments, as shown in FIGS. 25 to FIG. 28, two transmission belts 5 and two main columns 301 are correspondingly provided, and a sliding guide mechanism is provided between the box body 3 of the lifting box 1 and the main columns 301. The sliding guide mechanism includes a guide sliding block 4010 provided on the fourth connecting plate 41 and a guide sliding track 505 provided on the main columns 301, and at least two guide sliding blocks 4010 distributed in the vertical direction are provided on the fourth connecting plate 41. The guide sliding blocks 4010 are in sliding fit with the guide sliding track 505, and integrally drive the lifting box 1 to slide on the guide sliding track 505 by the transmission belt 5.

It should be noted that the sliding guide mechanism is configured to play the role of assisting in guiding of lifting or lowering of the lifting box 1, which can be realized by the way of fit between the sliding block and the sliding track, or by the way of sliding fit between a smooth shaft and a guide hole.

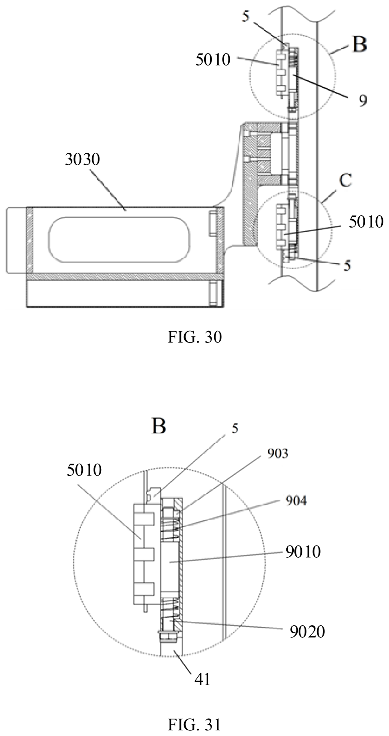

In some embodiments, as shown in FIGS. 30 to 32, the two connecting fasteners 5010 include a tensioning device 9 for adjusting tensioning of the transmission belt 5 in the vertical direction (in the Z-axis direction). The tensioning device 9 includes a toothed tensioning moving block 9010 arranged on the connecting fastener 5010, and the toothed tensioning moving block 9010 is meshed with the transmission belt 5. A tensioning bolt 9020 is rotatably mounted on the fourth connecting plate 41, so that the toothed tensioning moving block 9010 is driven to move upward or downward in the vertical direction by rotating the tensioning bolt 9020 forward or backward, to adjust a relative position between the transmission belt 5 and the fourth connecting plate 41, so as to realize adjust the tensioning force of the transmission belt 5. The tensioning bolt 9020 in this embodiment can be a hexagonal socket bolt, and the adjustment can be realized by means of a hexagonal wrench. When the tensioning force of the transmission belt 5 needs to be increased, the transmission belt 5 can be pulled downward relative to the fourth connecting plate 41 using the tensioning device 9 on the connecting fastener 5010 at the upper position, and the transmission belt 5 can be pulled downward relative to the fourth connecting plate 41 using the tensioning device 9 on the connecting fastener 5010 at the lower position, thereby tensioning the transmission belt 5.

A stopping block 903 threadedly engaged with the tensioning bolt 9020 is mounted in the fourth connecting plate 41 and a spring 904 is mounted between the toothed tensioning moving block 9010 and the stopping block 903, and the stopping block 903 axially acts on the toothed tensioning moving block 9010 via the spring 904 by rotating the tensioning bolt 9020 (the tensioning bolt 9020 does not move axially), to move the toothed tensioning moving block 9010 upward or downward along the vertical direction, thereby adjusting the relative position between the transmission belt 5 and the fourth connecting plate 41, and adjusting the tensioning force of the transmission belt 5.

It should be noted that it is not limited to pushing the toothed tensioning moving block 9010 to move by the stopping block 903 and the spring 904, but it is also possible to directly drive the toothed tensioning moving block 9010 by the arrangement of the threaded connection between the tensioning bolt 9020 and the toothed tensioning moving block 901. The rotation of the tensioning bolt 9020 directly drives the toothed tensioning moving block 9010 to move, so as to adjust the tensioning force of the transmission belt 5. The tensioning device 9 may also adopt other structures to adjust the tensioning force of the transmission belt 5.

In some embodiments, the box body 3 of the lifting box 1 includes a box body frame 3030, which can be configured to carry a manipulator (the manipulator is configured to clamp a wafer box), and a fifth connecting plate 4 is fixedly mounted at an end, close to the main column 301, of the box body frame 3030. As shown in FIG. 27, the box body frame 3030 is hollow and may be configured to mount an electric drive portion of the manipulator. The fifth connecting plate 4 is vertically mounted on the box body frame 3030 at a side close to the main column 301, and a side end surface of the fifth connecting plate 4 faces the main column 301. A sealing plate 3040 is mounted on the box body frame 3030, to provide protection for the components mounted inside the lifting box 1. Heat dissipation holes 3050 are provided on the sealing plate 3040, and a protective shed 3060 is mounted above the box body frame 3030 for playing a protective role for the wafer box inside the lifting box 1, which provides safety and protection for transporting the wafer box, and prevent the wafer box from falling out of the lifting box 1 due to uneven force or other abnormal external force during transportation. As shown in FIG. 27, the protective shed 3060 is plate-shaped with weight-reducing through-holes. The protective shed 3060 is mounted to the box body frame 3030 by four connecting rods in the vertical direction, and an accommodating cavity is formed between the protective shed 3060 and the box body frame 3030 for placing the manipulator and the wafer box.

Based on the same inventive concept, embodiments of the present specification further provide a stacker of a semiconductor storage stereoscopic warehouse, based on the lifting box mechanism of the stacker of the semiconductor storage stereoscopic warehouse according to any of the foregoing embodiments, the stacker further includes a traveling module 100 arranged at the bottom of the column bracket, the traveling module 100 slides transversely on an external guide track (in this embodiment, the direction of the transverse sliding of the traveling module 100 is the X-axis direction). One end of the traveling module 100 is mounted with a drive motor for driving the transmission belt 5 to be lifted or lowered. The movement of the stacker in the X-axis direction is realized by the traveling module 100 of the stacker, and the movement of the stacker in the Z-axis direction is realized by the transmission belt 5 connected with the lifting box 1.

As shown in FIG. 1 to FIG. 33, embodiments of the present disclosure further provide a stacker system, which includes a track device, a traveling device and a lifting device. The track device includes a first track (a sky track) arranged above the traveling path of the stacker, and a second track (a guide track) and a third track (a friction track) arranged below the traveling path of the stacker. The traveling device includes a traveling box, and a box body of the traveling box is slidably connected with the second track (the guide track). The lifting device includes a lifting frame and a lifting box, and a box body of the lifting box is slidably connected with the lifting frame. One end of the lifting frame is fixedly connected with a top surface of the box body of the traveling box, and the other end is slidably connected with the first track (the sky track). The box body of the traveling box includes a first box region and a second box region which are arranged adjacent to each other along a length direction of the box body, and a traveling power mechanism for driving the stacker to travel along a length direction of the track is provided in the first box region. A lifting power mechanism for driving the lifting box to be lifted or lowered along a vertical direction in a region defined by the lifting frame.

It is worth noting that in the embodiments provided in FIG. 1 to FIG. 14, the embodiments provided in FIG. 8, FIG. 15 to FIG. 19, the embodiments provided in FIG. 8, FIG. 10, and FIG. 20 to FIG. 22, and the embodiments provided in FIG. 23 to FIG. 33, similar components may use different terms (for example, the traveling power mechanism 202 and the drive motor 202, the position-limiting plate 118 and the elastic assembly supporting plate 118, the linear guide track 902 and the guide track 902, the connecting rotation shaft 206 and the rotation shaft 216, the column bracket and the lifting frame 300, the transmission mechanism and the lifting transmission assembly, the position detection device and the vertical positioning assembly 6, the position monitoring module and the second code scanner 601, the position reading module and the lifting position barcode 602, the first connecting portion 2031 and the first connecting plate 2031, the second connecting portion 2034 and the second connecting plate 2034, the lifting motor 501 and lifting power mechanism 501), or similar components may use different reference numerals (for example, the friction drive wheels 201 and 208, the cable insertion ports 8 and 3021), but their positions and functions are similar respectively, and the details of each embodiment can be implemented in cooperation without conflict.

Although the specific embodiment of the present disclosure has been described above, it should be understood by those skilled in the art that this is only an example, and the protection scope of the present disclosure is defined by the appended claims. Those skilled in the art can make various changes or modifications to these embodiments without departing from the principle and essence of the present disclosure, but these changes and modifications all fall within the protection scope of the present disclosure.

## Claims

1. A stacker, comprising:
a traveling device, including a traveling box, a friction transmission mechanism mounted in the traveling box, and a horizontal positioning assembly mounted on the traveling box for positioning a traveling position of the traveling device, wherein the friction transmission mechanism includes a friction drive wheel that passes through the traveling box and is in friction fit with a friction track on the ground, and a traveling power mechanism for driving the friction drive wheel to rotate;
a lifting device, including a lifting frame mounted at the top of the traveling box, a robotic arm carrier assembly mounted on the lifting frame, a lifting transmission assembly for driving the robotic arm carrier assembly to be lifted or lowered along the lifting frame, a lifting power mechanism for driving the lifting transmission assembly, and a vertical positioning assembly for positioning a lifting position of the robotic arm carrier assembly; and
a control device, configured to control the traveling power mechanism to drive the traveling device to travel to a target traveling position according to the traveling position fed back by the horizontal positioning assembly, and further configured to control the lifting power mechanism to drive the robotic arm carrier assembly to be lifted to a target lifting position according to the lifting position fed back by the vertical positioning assembly.

2. The stacker of claim 1, wherein a barcode mounting plate is horizontally provided along a traveling path of the stacker, and a plurality of traveling position barcodes are provided on the barcode mounting plate for indicating the traveling position;
the horizontal positioning assembly includes a first code scanner mounted on the traveling box, and the first code scanner is configured to scan the traveling position barcodes and transmit a scanning result to the control device.

3. The stacker of claim 1, wherein the lifting device further includes a plurality of lifting position barcodes for indicating the lifting position;
the vertical positioning assembly includes a second code scanner mounted on the robotic arm carrier assembly, and the second code scanner is configured to scan the lifting position barcodes and transmit a scanning result to the control device.

4. The stacker of claim 1, wherein the traveling device further includes: a traveling deceleration sensor assembly and/or a traveling position-limiting sensor assembly arranged on the traveling box;
wherein the traveling deceleration sensor assembly is configured to trigger the control device to perform a corresponding horizontal deceleration operation in response to sensing that the stacker travels to a corresponding horizontal deceleration position; and
the traveling position-limiting sensor assembly is configured to trigger the control device to perform a corresponding horizontal position-limiting operation in response to sensing that the stacker travels to a corresponding horizontal limit position.

5. The stacker of claim 4, wherein the horizontal deceleration operation includes: detecting whether a traveling speed of the stacker is less than a corresponding traveling speed threshold,
and controlling the traveling power mechanism to decelerate and give an alarm in response to the traveling speed of the stacker being not less than the corresponding traveling speed threshold.

6. The stacker of claim 5, wherein the traveling deceleration sensor assembly includes a first-stage traveling deceleration sensor and a second-stage traveling deceleration sensor;
wherein the first-stage traveling deceleration sensor is configured to trigger the control device to detect whether the traveling speed of the traveling device is less than a first traveling speed threshold in response to sensing that the stacker travels to a first horizontal deceleration position, and control the traveling power mechanism to decelerate and give an alarm in response to the first traveling speed of the traveling device being not less than the first traveling speed threshold; and
the second-stage traveling deceleration sensor is configured to trigger the control device to detect whether the traveling speed of the traveling device is less than a second traveling speed threshold in response to sensing that the stacker travels to a second horizontal deceleration position, and control the traveling power mechanism to decelerate and give an alarm in response to the traveling speed of the traveling device being not less than the second traveling speed threshold;
wherein along a traveling direction of the stacker, the stacker first reaches the first horizontal deceleration position and then reaches the second horizontal deceleration position, and the first traveling speed threshold is greater than the second traveling speed threshold.

7. The stacker of claim 1, wherein the lifting device further includes: at least one of an upper position-limiting sensor assembly, an upper deceleration sensor assembly, a lower deceleration sensor assembly, and a lower position-limiting sensor assembly arranged along a lifting direction of the robotic arm carrier assembly;
wherein the upper position-limiting sensor assembly is configured to trigger the control device to perform a corresponding lifting position-limiting operation in response to sensing that the robotic arm carrier assembly is lifted to a corresponding upper limit position;
the upper deceleration sensor assembly is configured to trigger the control device to perform a corresponding lifting deceleration operation in response to sensing that the robotic arm carrier assembly is lifted to a corresponding upper deceleration position;
the lower deceleration sensor assembly is configured to trigger the control device to perform a corresponding lowering deceleration operation in response to sensing that the robotic arm carrier assembly is lowered to a corresponding lower deceleration position; and
the lower position-limiting sensor assembly is configured to trigger the control device to perform a corresponding lowering position-limiting operation in response to sensing that the robotic arm carrier assembly is lowered to a corresponding lower limit position.

8. The stacker of claim 1, wherein a sky track is provided above a traveling path of the stacker; the top of the lifting frame is provided with an upper guide wheel assembly in sliding fit with the sky track.

9. The stacker of claim 1, wherein the stacker further comprises: a power-taking assembly arranged on a side of the traveling box;
a power-supply assembly electrically connected with the power-taking assembly; and
an energy-storage assembly electrically connected with the power-taking assembly and the power-supply assembly;
wherein a portion of electrical energy obtained by the power-taking assembly is supplied to the power-supply assembly, another portion of the electrical energy is stored in the energy-storage assembly, and the power-supply assembly is configured to supply power to the stacker.

10. The stacker of claim 1, wherein the lifting transmission assembly includes:
a driving pulley, arranged on a side of the traveling box and connected with the lifting power mechanism;
a driven pulley, arranged at a top end of the lifting frame and connected with the driving pulley by a synchronous belt; and
a vertical guide track, arranged along a height direction of the lifting frame;
wherein, the robotic arm carrier assembly is fixedly connected with the synchronous belt and is in sliding fit with the vertical guide track to be lifted or lowered along the vertical guide track driven by the synchronous belt.

11. The stacker of claim 10, wherein the side of the traveling box is provided with an adjusting wheel abutting against a side of the synchronous belt, and the adjusting wheel is rotatable along with the rotation of the synchronous belt.

12. The stacker of claim 1, wherein the traveling device further includes a drive wheel supporting seat for supporting the friction drive wheel;
wherein one end of the drive wheel supporting seat is rotatably fixed in the traveling box; and
the other end of the drive wheel supporting seat is fixed in the traveling box by an elastic assembly arranged above the drive wheel supporting seat.

13. The stacker of claim 12, wherein the elastic assembly includes an elastic element and an elastic force adjusting mechanism;
wherein a bottom end of the elastic element is connected with a top surface of the other end of the drive wheel supporting seat; and
the elastic force adjusting mechanism is connected with a top end of the elastic element and is configured to adjust an elastic force generated by the elastic element.

14. The stacker of claim 13, wherein a position-limiting plate is provided in the traveling box, and the position-limiting plate is arranged above the elastic element;
the elastic force adjusting mechanism includes a fixing member in threaded fit with the position-limiting plate, and a bottom end of the fixing member is connected with the top end of the elastic element;
the elastic assembly further includes a scale mounted on a top surface of the position-limiting plate.

15. The stacker of claim 13, wherein the elastic element includes: an elastic element body, a first clamping plate, and a second clamping plate;
wherein the first clamping plate is in snap fit with a top end of the elastic element body, and the second clamping plate is in snap fit with a bottom end of the elastic element body;
wherein the first clamping plate is fixedly connected with the elastic force adjusting mechanism and the second clamping plate is fixedly connected with the top surface of the other end of the drive wheel supporting seat.

16. The stacker of claim 13, wherein the drive wheel supporting seat includes a first mounting plate portion, a second mounting plate portion, and a connecting portion which are integrally formed;
wherein the first mounting plate portion and the second mounting plate portion are symmetrically arranged along a width direction of the stacker and are provided with coaxial through holes respectively, an output shaft of a drive motor passes through the through hole of the first mounting plate portion and is connected with one end of a rotation shaft of the drive wheel, and the other end of the rotation shaft of the drive wheel passes through the through hole of the second mounting plate portion;
one end of the first mounting plate portion and one end of the second mounting plate portion are rotatably connected with a connecting rotation shaft, the connecting portion includes a first connecting plate and a second connecting plate, the other end of the first mounting plate portion and the other end of the second mounting plate portion are connected by the first connecting plate, and a top surface of the first connecting plate is connected with the elastic assembly, and the first mounting plate portion and the second mounting plate portion are connected by the second connecting plate which is arranged at ends, close to the connecting rotation shaft, of the first mounting plate portion and the second mounting plate portion and extends along a height direction of the stacker.

17. The stacker of claim 16, wherein a bearing sleeved on the rotation shaft of the drive wheel is further provided in the through hole of the second mounting plate portion;
the second mounting plate portion is further provided with a bearing cover at a side away from the first mounting plate portion, and the bearing cover has a sleeve portion clamped between the bearing and the second mounting plate portion along an axial direction of the bearing.

18. The stacker of claim 17, wherein a retaining ring is sleeved on the rotation shaft of the drive wheel, and the retaining ring abuts against the bearing at an end away from the bearing cover.

19. The stacker of claim 12, wherein a fixed seat is provided on a side wall of the traveling box, and the one end of the drive wheel supporting seat is rotatably connected with the fixed seat by a connecting rotation shaft.

20. The stacker of claim 19, wherein the connecting rotation shaft is arranged to be parallel to a rotation shaft of the drive wheel;
the rotation shaft of the drive wheel is arranged to be coaxially connected with an output shaft of a drive motor.

21. The stacker of claim 19, wherein an oil-free bushing is clamped between the connecting rotation shaft and the fixed seat; and/or
a tensioning sleeve is clamped between a rotation shaft of the drive wheel and a hub of the drive wheel.

22. The stacker of claim 1, wherein a plurality of sliding blocks are mounted at the bottom of the traveling box, and the plurality of sliding blocks are configured to be in sliding fit with a guide track on the ground.

23. The stacker of claim 1, wherein a light emitting end is provided on a traveling path of the stacker and a light receiving end is provided on the stacker;
wherein in response to the light receiving end receiving a light signal emitted by the light emitting end, the control device is triggered, based on access task data sent from a host computer, to control the traveling power mechanism to operate in combination with the traveling position positioned by the horizontal positioning assembly, and control the lifting power mechanism to operate in combination with the lifting position positioned by the vertical positioning assembly.

24. The stacker of claim 1, wherein the traveling box includes a bottom plate and a box body mounted on a top surface of the bottom plate;
wherein a bottom surface of the bottom plate is configured to mount a plurality of sliding blocks arranged along a length direction of the traveling box and in fit with a guide track on the ground, wherein the length direction of the traveling box is a traveling direction of the stacker, and a width direction of the traveling box is orthogonal to the length direction in a horizontal plane;
the box body of the traveling box includes a first box region and a second box region which are arranged adjacent to each other along the length direction;
the first box region is configured to accommodate a traveling mechanism for driving the stacker to travel, the traveling mechanism includes the friction drive wheel which passes through the bottom plate and is in fit with the friction track on the ground, and a traveling motor which is connected with the friction drive wheel;
the second box region is configured to accommodate a lifting motor and driving pulleys connected with the lifting motor to drive a lifting belt of the stacker to move are respectively mounted on two outer sides of the second box region along the width direction of the box body of the traveling box.

25. The stacker of claim 24, wherein the first box region includes: a first vertical plate, a second vertical plate, a third vertical plate, and a first top plate;
wherein the first vertical plate and the second vertical plate are arranged oppositely parallel to each other along the length direction of the box body of the traveling box;
the third vertical plate is connected and perpendicular to the first vertical plate and the second vertical plate, wherein a first accommodating space is formed among the third vertical plate, the first vertical plate and the second vertical plate for accommodating the traveling mechanism; and
the first top plate is arranged at a top end of the first accommodating space for supporting columns of the stacker.

26. The stacker of claim 25, wherein the first box region further includes a fourth vertical plate with one end vertically connected to the first vertical plate, and a fifth vertical plate with one end vertically connected to the second vertical plate, and the other end of the fourth vertical plate and the other end of the fifth vertical plate are spaced apart to form a gap in the length direction of the box body of the traveling box for the traveling motor to pass through the gap to be connected with the friction drive wheel.

27. The stacker of claim 26, wherein the first top plate is in a shape of hollow square, and one end of the first top plate is mounted on a side wall of the first vertical plate, and the first top plate covers the top of the second vertical plate, the top of the third vertical plate, the top of the fourth vertical plate and the top of the fifth vertical plate.

28. The stacker of claim 27, wherein the first top plate includes a top plate body, and a third connecting plate detachably connected with the top plate body, and a position of the third connecting plate corresponds to a position of the gap.

29. The stacker of claim 26, wherein the traveling mechanism further includes: a drive wheel supporting seat and an elastic assembly;
wherein the drive wheel supporting seat is configured to support the friction drive wheel, and one end of the drive wheel supporting seat is mounted to the second vertical plate by a rotation shaft; and
a bottom end of the elastic assembly is fixed to the other end of the drive wheel supporting seat;
wherein the first box region further includes: an elastic assembly supporting plate arranged between the third vertical plate and the fourth vertical plate, and the elastic assembly supporting plate is configured to mount an adjustable fixing member, and a bottom end of the fixing member passes through the elastic assembly supporting plate to be fixed to a top end of the elastic assembly.

30. The stacker of claim 25, wherein the first box region further includes a cable-stayed plate, one end of the cable-stayed plate is fixed to the first top plate, the other end of the cable-stayed plate is fixed to the first vertical plate;
the first box region further includes a sixth vertical plate vertically connected to the second vertical plate;
the first top plate is further configured to mount a code reader assembly;
a side of the second vertical plate is further configured to mount a deceleration trigger assembly; and/or
an outer side surface of the third vertical plate is further configured to support a power-taking assembly mounted on the bottom plate.

31. The stacker of claim 24, wherein the second box region includes: a seventh vertical plate, an eighth vertical plate, and a second top plate;
wherein the seventh vertical plate and the eighth vertical plate are arranged oppositely parallel to each other along the width direction of the box body of the traveling box; and
the second top plate covers the top of the seventh plate and the top of the eighth plate, and is configured to support columns of the stacker;
wherein a second accommodating space is formed between the seventh vertical plate and the eighth vertical plate for accommodating the lifting motor, the seventh vertical plate and the eighth vertical plate are configured to support the lifting motor, and the driving pulleys are symmetrically mounted on an outer side of the seventh vertical plate and an outer side of the eighth vertical plate; and
a notch is formed on the second top plate for the lifting motor to pass through.

32. The stacker of claim 31, wherein the outer side of the seventh vertical plate and the outer side of the eighth vertical plate are further symmetrically provided with reinforcing plates arranged diagonally above the driving pulleys, and each reinforcing plate is configured to mount an adjusting wheel abutting against a side of the lifting belt.

33. The stacker of claim 3, wherein the robotic arm carrier assembly includes a lifting box slidably carried on the lifting frame, the lifting frame includes a main column and an auxiliary column fixed relative to the main column, and the vertical positioning assembly is configured to obtain a height position of the lifting box in real time;
the second code scanner is arranged at a side end of the lifting box, and the lifting position barcode is arranged on the auxiliary column or the main column, the second code scanner faces the lifting position barcode and is configured to read a position information of the lifting position barcode in real time.

34. The stacker of claim 33, wherein the lifting frame is provided with a cable plug interface, and the lifting box is connected with a cable, wherein one end of the cable is lifted or lowered synchronously with the lifting box, and the other end of the cable is provided with a cable plug structure which is detachably plugged into the cable plug interface.

35. The stacker of claim 34, wherein the auxiliary column includes a first auxiliary column, and the cable plug interface is fixedly mounted on the first auxiliary column, the cable is covered with a drag chain for protection, one end of the drag chain is connected to a box body of the lifting box, and the other end of the drag chain is connected to the first auxiliary column of the auxiliary column, and the cable in the drag chain is lifted or lowered with the lifting box.

36. The stacker of claim 35, wherein the auxiliary column further includes a second auxiliary column, the lifting position barcode is arranged on the second auxiliary column, a code scanning range of the second code scanner directly faces the lifting position barcode, and the second code scanner is configured to scan the lifting position barcode, to determine a real-time position information of the lifting box.

37. The stacker of claim 33, wherein a box body of the lifting box is provided with a fourth connecting plate at a side close to a side of the main column, the transmission mechanism includes a transmission belt mounted on the fourth connecting plate, the transmission belt is configured to drive the box body of the lifting box to be lifted or lowered, and a transmission belt state monitoring element for detecting whether the transmission belt is in an abnormal state is built in the transmission belt, the transmission belt state monitoring element is configured as a metal core wire for forming an electrical circuit, and each transmission belt is configured with two metal core wires.

38. The stacker of claim 37, wherein two transmission belts and two main columns are correspondingly provided, each transmission belt has two ends and the two ends are mounted on the fourth connecting plate in a height direction of the stacker by two connecting fasteners arranged up and down, and each connecting fastener includes a tensioning device for adjusting tensioning of the transmission belt, the tensioning device includes a toothed tensioning moving block arranged on the corresponding connecting fastener, and the toothed tensioning moving block is meshed with the transmission belt, a tensioning bolt is rotatably mounted on the fourth connecting plate, and the toothed tensioning moving block is driven to move upward or downward along the height direction of the stacker by rotating the tensioning bolt forward or backward, to adjust a relative position between the transmission belt and the fourth connecting plate.

39. The stacker of claim 38, wherein a stopping block threadedly engaged with the tensioning bolt is mounted in the fourth connecting plate, a spring is mounted between the toothed tensioning moving block and the stopping block, and the stopping block axially acts on the toothed tensioning moving block via the spring by rotating the tensioning bolt, to move the toothed tensioning moving block upward or downward along the height direction of the stacker.

40. The stacker of claim 37, wherein a sliding guide mechanism is provided between the box body of the lifting box and the main column, the sliding guide mechanism includes a guide sliding block arranged on the fourth connecting plate and a guide sliding track arranged on the main column, the guide sliding block is in sliding fit with the guide sliding track, and the lifting box is driven to slide on the guide sliding track by the transmission belt.

41. The stacker of claim 35, wherein the cable plug interface is detachably mounted on the first auxiliary column of the lifting box by an interface bracket, and the drag chain is respectively fixed to the box body of the lifting box and the first auxiliary column by drag chain brackets.

42. The stacker according to any one of claims 37 to **41,** wherein the traveling device is arranged at the bottom of the lifting frame and is configured to slide back and forth on a guide track along a length direction of the stacker, and a drive motor is mounted at one end of the traveling device for driving the transmission belt to be lifted or lowered.
